(19) Europäisches Patentamt
European Patent Office
Office européen des brevets

(11) **EP 2 628 041 B1**

(12) **FASCICULE DE BREVET EUROPEEN**

(45) Date de publication et mention
de la délivrance du brevet:
**30.05.2018 Bulletin 2018/22**

(51) Int Cl.:
***G02B 21/00*** *(2006.01)*

(21) Numéro de dépôt: **11782178.5**

(86) Numéro de dépôt international:
**PCT/FR2011/000555**

(22) Date de dépôt: **14.10.2011**

(87) Numéro de publication internationale:
**WO 2012/049381 (19.04.2012 Gazette 2012/16)**

(54) **PROCEDE ET DISPOSITIF DE MESURE OPTIQUE**

VERFAHREN UND VORRICHTUNG ZUR OPTISCHEN MESSUNG

METHOD AND DEVICE FOR OPTICAL MEASUREMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.10.2010 FR 1004067**

(43) Date de publication de la demande:
**21.08.2013 Bulletin 2013/34**

(73) Titulaire: **Bioaxial SAS
75014 Paris (FR)**

(72) Inventeur: **SIRAT, Gabriel Y.
75011 Paris (FR)**

(56) Documents cités:
**WO-A2-2009/066253     US-A1- 2002 141 052
US-A1- 2003 210 405     US-A1- 2007 070 496**

- **BERRY M V ET AL: "Conical diffraction:
observations and theory", PROCEEDINGS OF
THE ROYAL SOCIETY OF LONDON. SERIES
A,CONTAINING PAPERS OF A MATHEMATICAL
AND PHYSICAL CHARACTER, ROYAL SOCIETY
OF LONDON, LONDON, GB, vol. 462, 8 février
2006 (2006-02-08), pages 1629-1642,
XP007918531, ISSN: 0950-1207, DOI:
DOI:10.1098/RSPA.2006.1680 cité dans la
demande**

**EP 2 628 041 B1**

**Description**

La présente invention concerne un procédé et un dispositif optique de mesure. Elle trouve des applications en particulier dans la Microscopie, par exemple, dans le domaine de la Biologie et l'acquisition de l'information biologique à partir d'observations optiques.

Un Microscope est un instrument optique utilisé en général pour voir, analyser ou mesurer les objets trop petits pour l'oeil nu.

Nous utiliserons le terme biologique pour décrire toute entité de la Science du vivant, quel que soit sa provenance, humaine, animale ou végétale et la finalité de son observation, recherche, diagnostique ou thérapeutique. Ce terme inclut les utilisations médicales de la technique décrite. La Microscopie est utilisée dans le domaine de la Biologie, par exemple, pour observer, étudier et mesurer des entités (objets) biologiques et leur dynamique.

Les définitions usuelles sont utilisées pour: limite de diffraction optique critère de Rayleigh, disque d'Airy et ses rayon et diamètre. Nous utilisons dans le contexte de l'invention les termes de superrésolution, superrésolu, d'imagerie de superrésolution et de microscopie de superrésolution pour décrire l'acquisition de données optiques, en imagerie ou en microscopie, à une résolution supérieure à la limite de diffraction optique. Les définitions usuelles sont utilisées pour la fluorescence et pour les fluorophores.

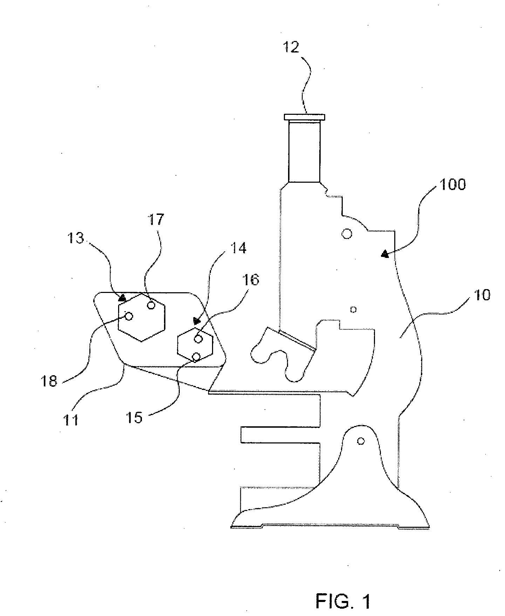

On se réfère maintenant à la Figure. 1, qui représente une illustration du paradigme de la Microscopie, 100, dans le domaine de la Biologie.

La Microscopie consiste en l'illumination, par une source lumineuse, non représentée, à l'aide d'un Microscope, 10, d'un échantillon biologique, 11, et la mesure en fonction du temps, à l'aide d'une observation visuelle ou d'un module de détection, 12, de la lumière émise par l'échantillon. L'échantillon en Biologie consiste en une - ou une pluralité - d'entités objets biologiques différentes, 13 et 14, positionnées à différentes positions. Des exemples de tels objets, sont, entre-autres, une cellule, un virus, une protéine et un fragment d'ADN.

La microscopie de fluorescence est une des variantes de la microscopie; elle a remplacé, dans de nombreuses applications biologiques, les autres techniques de microscopie. Un microscope à fluorescence est un microscope optique utilisé pour étudier les propriétés des substances organiques ou inorganiques utilisant les phénomènes de fluorescence au lieu de, ou en plus d'autres modalités telle que la réflexion et l'absorption.

On se réfère de nouveau à la Figure. 1, décrivant un microscope de fluorescence; en microscopie de fluorescence on fixe des fluorophores, de minuscules sources ponctuelles, 15 à 18, basées sur le phénomène physique de la fluorescence à un photon, à des positions spécifiques et prédéterminées des objets biologiques, 13 et 14; on observe la lumière émise par les fluorophores en lieu et place d'observer la lumière émise par les objets biologiques, 13 et 14, eux-mêmes.

L'échantillon est éclairé par une lumière de longueur d'onde, ou de longueurs d'onde spécifiques, qui est absorbée par les fluorophores, induisant ainsi l'émission de lumière à des longueurs d'onde différentes et plus élevées. La lumière d'illumination est séparée de la fluorescence émise, qui est plus faible, par l'utilisation d'un filtre spectral d'émission.

Les fluorophores sont devenus un outil important de la visualisation d'objets biologiques. L'activité et l'information biologique comprenant des détails au-dessus de la limite de résolution de 200 nm sont systématiquement visualisés et mesurées en utilisant la microscopie de fluorescence. Cette limite de résolution est dérivée du critère de Rayleigh, qui, dans le meilleur des cas, atteint 200nm dans des systèmes conçus spécialement. Pendant longtemps, jusqu'à l'émergence des techniques de superrésolution décrites ci-dessous, il était assumé que les techniques optiques, y compris la microscopie de fluorescence, sont incapables de visualiser des détails plus petits que le critère de Rayleigh, de l'ordre de 200 nm.

Cependant, d'autres activités biologiques fondamentales se produisent également à des échelles de taille inférieure à 200 nm dans des échantillons biologiques. A ce niveau de résolution spatiale, des phénomènes importants peuvent être observés : les processus biologiques à l'échelle intracellulaire, le transfert d'information cellulaire, le repliement et le dépliement des protéines et les modifications de l'ADN et l'ARN. Ainsi, par exemple, la mesure de ces informations intracellulaires ouvrira de nouvelles voies à la compréhension de l'activité biologique, et conduira à des progrès dans la connaissance et le suivi de la recherche et du diagnostic médical.

Les principales implémentations de la microscopie de fluorescence, décrites en détails dans la littérature, sont le microscope confocal, souvent utilisé dans une configuration à balayage ou à disque rotatif et le microscope d'imagerie à grand champ.

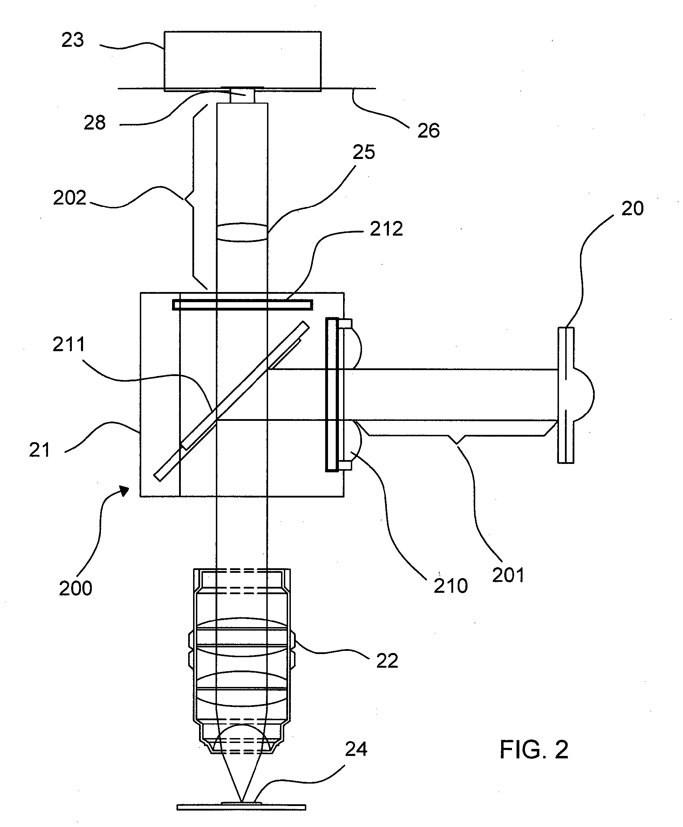

On se réfère maintenant à la figure. 2, qui est une représentation simplifiée d'un microscope confocal à fluorescence de l'art antérieur 200.

Un microscope confocal de fluorescence, Fig. 2, est un instrument optique. Ses principaux composants matériels sont représentés dans la figure. 2. Ils comprennent:

Une source de lumière, 20,

2

un cadre optomécanique non représenté,

un cube de filtres, 21,

un objectif de microscope 22, et,

un ensemble détecteur, 23,

une unité de traitement, non représentée.

La source de lumière, 20, qui peut être une lampe à arc ou d'un laser, crée de l'énergie lumineuse nécessaire pour la fluorescence.

Le cadre optomécanique, non représenté, est le support de tous les éléments optiques et comprend des optiques auxiliaires et les capacités d'alignement. Il comprend également, des éléments optiques, non représentés, capables de façonner le faisceau, pour permettre sa focalisation d'un point de taille minimale, au moyen de l'objectif du microscope.

Il peut comprendre également, dans un microscope confocal de fluorescence à balayage, un mécanisme de balayage, spatial ou angulaire, non représenté pour modifier la position de la source ponctuelle par rapport à l'objet à mesurer.

Le mécanisme de balayage peut alternativement:

translater mécaniquement l'objet, en utilisant par exemple une platine de translation,
scanner optiquement le faisceau sur l'objet, en utilisant par exemple un ensemble de miroirs galvanométriques ou translateurs acousto-optiques, ou
utiliser une combinaison quelconque de ces moyens de translation, mécaniques ou optiques.

Dans un microscope confocal de fluorescence à balayage, l'information est recueillie point à point, en utilisant le mécanisme de balayage.

Il peut comprendre également, dans un microscope confocal de fluorescence à disque rotatif, un disque rotatif, comportant une pluralité de trous microscopiques, permettant la projection simultanée d'une pluralité de points. Dans un microscope confocal de fluorescence à disque rotatif, un ensemble de points, correspondant aux trous microscopiques est acquis à chaque instant et la rotation du disque permet de balayer l'ensemble de la surface de l'échantillon pour une position longitudinale donnée.

Le cube de filtres, 21, canalise les différents signaux optiques et évite la contamination du signal de fluorescence par l'émission. Le cube de filtres se décompose en: filtre d'excitation, 210, miroir dichroïque, 211, et filtre d'émission, 212. Les filtres et le miroir dichroïque sont choisis en fonction de la longueur d'onde d'excitation et des caractéristiques spectrales d'émission du fluorophore.

L'objectif de microscope, 22, focalise la lumière créée par la source dans le plan focal de l'objectif, 24, en une distribution lumineuse de taille réduite, la distribution lumineuse optimale consistant en un disque d'Airy. L'objectif de microscope, 22, permet également de recueillir en retour la lumière fluorescente émise par les fluorophores.

Pour un microscope confocal de fluorescence à balayage le système peut être déscanné, c'est-à-dire que la lumière en retour peut passer par le mécanisme de balayage pour compenser la translation due au balayage.

Une lentille de détecteur, 25, crée, au plan image du détecteur 26, une image magnifiée du plan focal de l'objectif, 24.

Un trou confocal, 27, est théoriquement placé dans le plan image du détecteur, 26. Dans la plupart des systèmes pratiques, le trou confocal, 27, est placé dans un plan d'imagerie intermédiaire non représenté et réimagé sur le plan image du détecteur, 26.

L'assemblage du détecteur, 23, détecte l'intensité fluorescente globale dans le volume éclairé, et la transforme en signal numérique. Pour un microscope confocal à balayage, l'assemblage du détecteur est constitué d'un détecteur d'un seul élément, comme un PMT ou SPAD. Pour un microscope confocal à disque rotatif, l'assemblage du détecteur est constitué d'une matrice d'éléments de détection, telle qu'un CCD, un EMCCD, un CMOS ou une matrice de SPAD.

L'ensemble des composants montés à partir de la source lumineuse jusqu'au filtre dichroïque est la voie d'éclairage, 201. L'ensemble des composants montés à partir du filtre dichroïque jusqu'à l'assemblage du détecteur est la voie de détection, 202.

Le processus optique élémentaire d'un microscope confocal peut être segmenté en six étapes:

- Projection de la lumière sur le volume d'analyse
- émission de lumière fluorescente par les fluorophores

- Imagerie des fluorophores sur le plan focal
- Limitation dans le plan focal de la lumière analysée par le trou confocal
- Intégration de la lumière analysée par un détecteur photoélectrique
- Visualisation de l'intensité mesurée sous forme d'une valeur de pixel dans une image

Des microscopes à fluorescence sont disponibles auprès de plusieurs fabricants, comme par exemple, Nikon, Zeiss, Leica ou Olympus. Les microscopes à fluorescence peuvent être soit des microscopes standards adaptés à la fluorescence soit des microscopes spécifiques optimisés pour la fluorescence. Les microscopes modernes sont des instruments polyvalents capables de fonctionner dans de nombreuses modalités différentes, y compris, mais sans s'y limiter, les modalités de fluorescence, en utilisant la même plate-forme optomécanique et la plupart des composants. La plupart des microscopes à fluorescence sont développés en tant que plate-forme ouverte, capable d'effectuer plusieurs fonctionnalités additionnelles avec des modifications minimes. D'autres microscopes à fluorescence sont des instruments dédiés, personnalisés à une tâche spécifique, comme le diagnostic médical ou pharmaceutiques.

De nouvelles méthodes optiques, les méthodes de superrésolution, sont capables de discriminer des fluorophores, en dessous du critère de Rayleigh. Ces méthodes, sont développés par plusieurs entreprises, laboratoires et chercheurs et certains des instruments utilisant ces méthodes, les microscopes de superrésolution, sont disponibles commercialement. Plusieurs analyses comparatives des méthodes de superrésolution ont été publiées récemment dans la littérature, comme l'article écrit par Ricardo Henriques et M. Musa Mhlanga, intitulé «PALM and STORM: What hides beyond the Rayleigh limit?", [1], ou l'article écrit par Kelly Rae Chi intitulé "Super resolution microscopy: breaking the limits", [2].

Une bibliographie mise à jour sur la superrésolution se trouve sur le site web de la société Zeiss, [3], et sur le site web de la société Nikon, [4].

Les différentes méthodes de microscopie existantes et les microscopes existants, n'incorporant pas la superrésolution, permettent l'observation microscopique dans la limite de la diffraction optique. Ceci réduit leur champ d'utilisation à un ensemble d'applications limité.

Les nouvelles techniques de superrésolution permettent elles d'obtenir des informations au-delà de la limite de résolution. Le principal problème de l'ensemble des techniques existantes de superrésolution est que l'enveloppe des performances, exprimée en termes de résolution latérale, de résolution longitudinale, de vitesse, d'intensité lumineuse nécessaire, de photo-toxicité dans l'objet biologique, d'aptitude à mesurer des objets différents, est très limitée.

De plus, la plupart des méthodes et instruments existants de superrésolution peuvent fournir soit une bonne résolution latérale, soit une bonne résolution longitudinale, mais rarement les deux.

De plus, tous ces instruments sont complexes et nécessitent une haute technicité de l'opérateur.

De plus, ces instruments ne peuvent observer généralement qu'une faible partie des spécimens biologiques, du a de fortes limitations opérationnelles, telles que pour certains d'entre eux une faible profondeur de champ ou de très fortes intensités nocives pour les cellules.

Un autre problème avec les méthodes et instruments existants de super résolution, est que la plupart d'entre eux sont en mesure de récupérer, dans le volume illuminé, les attributs d'un fluorophore unique, mais ne parviennent pas à reconnaître simultanément la présence de plusieurs fluorophores et de mesurer leurs attributs.

Un problème supplémentaire avec les méthodes et instruments existants de superrésolution est que ces méthodes et instruments existants sont présentés aux utilisateurs et perçus par eux comme un outil général, apte à remplacer les microscopes standard ou confocal. Cependant, les méthodes et instruments existants de superrésolution manquent de la simplicité, de la robustesse, de la facilité d'utilisation et des prix compétitifs des microscopes standard ce qui freine leur utilisation comme outils de recherche générale ou comme outils de diagnostic.

Un autre problème avec les méthodes et instruments existants de superrésolution est que la plupart de ces méthodes et instruments sont construits comme des instruments autonomes conçus pour remplacer les microscopes standards. Une telle approche, nécessite le remplacement des instruments existants ainsi que le renouvellement de tous les systèmes périphériques et toutes les connaissances et savoir-faire, liés aux plateformes de microscopie et développés depuis de nombreuses années.

Un autre problème avec la plupart des méthodes et instruments existants de microscopie de fluorescence et de superrésolution est que ces méthodes et instruments sont conçus sur un paradigme d'acquisition d'image, pour lequel l'entité de base de l'information est une - ou plusieurs images, ou une - ou plusieurs - régions ROI - Région Of Interest bi ou tridimensionnelles. Les méthodes algorithmiques, systémiques et de superrésolution décrites ultérieurement dans le contexte de l'invention permettront, par leur inhérente flexibilité, le développement de stratégies nouvelles d'acquisition. Ces procédures d'acquisition, dynamiques et sélectives, seront définies par une gestion optimisée de la séquence d'acquisition et de traitement interactif et différé. Elles permettront une optimisation plus évoluée de l'information utile, définie par des critères basés sur la forme, la géométrie et la dynamique d'un ou plusieurs objets fluorescents, séparément ou l'un par rapport à l'autre.

Il y a donc toujours un besoin urgent de fournir des méthodes et instruments de superrésolution et des méthodes algorithmiques capable de mesurer avec une grande précision les attributs d'un fluorophore. Il est en outre nécessaire de fournir des méthodes et des instruments pour détecter et quantifier la présence de plusieurs fluorophores placés dans le même volume illuminé.

WO 2009/066253 décrit un générateur de points lumineux multimodal et un microscope multimodal à balayage multipoints.

RESUME DE L'INVENTION

Un but d'au moins un mode de réalisation de la présente invention est de fournir une technique de superrésolution en microscopie de fluorescence pour la biologie, plus généralement aux sciences de la vie et, finalement, à la pharmacologie, la médecine et au diagnostic, qui permettra de surmonter les lacunes des dispositifs de l'art antérieur.

Un des buts d'au moins un mode de réalisation de la présente invention est de fournir une technique de superrésolution en microscopie de fluorescence pour la biologie afin de réaliser un système optique qui est capable de mesurer avec une grande précision les attributs d'un fluorophore, ainsi que de reconnaître et de mesurer les attributs de plusieurs fluorophores placés dans le même volume illuminé.

Un autre but d'au moins un mode de réalisation de l'invention est de fournir une technique de superrésolution en microscopie de fluorescence pour la biologie qui mesure avec une grande précision les attributs d'un fluorophore.

Un autre but d'au moins un mode de réalisation de l'invention est de fournir une technique de superrésolution en microscopie de fluorescence pour la biologie qui acquiert et mesure, avec une grande précision, les attributs de plusieurs fluorophores présents dans le même volume illuminé. L'invention est définie par les revendications. A cet effet, un premier aspect de l'invention propose un procédé optique de mesure pour déterminer la position spatiale d'au moins un nanoémetteur lumineux d'un échantillon, le procédé comportant :

la projection d'une séquence d'au moins deux distributions lumineuses de familles topologiques différentes sur l'échantillon,
la détection de la lumière réémise par ledit au moins un nanoémetteur lumineux de l'échantillon ;
la génération, d'au moins une image optique pour chaque distribution lumineuse, à partir de la lumière détectée ; et
l'analyse algorithmique des images optiques pour obtenir une information de localisation dudit au moins un nanoémetteur lumineux.

La détection peut comporter la détection de la lumière réémise à une longueur d'onde moyenne λ. La lumière réémise peut être collectée par un objectif à forte ouverture numérique. Les deux distributions peuvent être compactes.

La pluralité des distributions peut être générée séquentiellement dans le temps, ou créée d'une façon simultanée.

Selon un mode de réalisation les deux distributions lumineuses compactes sont collocalisées sur l'échantillon.

Selon un mode de réalisation lesdites au moins deux distributions lumineuses compactes de familles topologiques différentes sont créées par une interférence entre une onde régulière et une onde singulière, ou entre deux ondes singulières, et une différenciation spatiale entre lesdites au moins deux distributions est créée en faisant varier au moins un des paramètres suivants:

a) au moins un des paramètres de l'onde régulière;

b) au moins un paramètre d'au moins une onde singulière et

c) une différence de phase entre l'onde régulière et l'onde singulière, ou entre deux ondes singulières.

Les paramètres variés peuvent inclure, l'amplitude, la phase, la polarisation, la cohérence, par exemple.

Selon un mode de réalisation le procédé inclus la création à partir d'une onde lumineuse incidente, de deux ondes lumineuses collocalisées, une régulière et une singulière.

Selon un mode de réalisation le procédé inclus en outre la séparation d'une onde incidente régulière, en deux ondes régulières suivant des trajets géométriques séparés ; la transformation, d'au moins une des ondes optiques régulières en une onde optique singulière; et la fusion des deux ondes optiques émergeantes créées.

Selon un mode de réalisation le procédé inclus en outre au moins un des étapes suivantes :

le contrôle de l'amplitude relative des ondes régulières et/ou singulières ;

le contrôle dans une séquence prédéterminée, de la polarisation et / ou de l'état de phase de l'onde lumineuse d'entrée ou de sortie d'un sous-module cristallin créant les ondes régulières et singulières; le contrôle de la forme des ondes régulières ou singulières ; et

l'alignement de la position centrale de la distribution lumineuse d'une onde par rapport à l'autre.

Selon un mode de réalisation le procédé inclus en outre la mise en forme, statique ou dynamique, de la polarisation émergeante de la superposition desdites distributions lumineuses, en mesure d'atténuer les effets vectoriels, sur la forme et la taille desdites distributions lumineuses compactes, effets créés par une grande ouverture numérique de l'objectif pour la génération des images optiques, en façonnant la polarisation émergeante en fournissant un état de polarisation statique à symétrie de rotation telle qu'une polarisation circulaire, radiale ou azimutale et / ou un état de polarisation dynamique.

Selon un mode de réalisation une région d'une taille sensiblement inférieure à une longueur d'onde $\lambda$ moyenne de la lumière réémise existe dans l'échantillon , dans laquelle la valeur d'une combinaison mathématique spécifique des intensités desdits au moins deux distributions lumineuses compactes de familles topologiques différentes est positive pour les positions latérales de la partie desdites distributions lumineuses inclues dans ladite région, et dans lequel ladite combinaison mathématique spécifique est proche de zéro dans toutes les autres parties de la distribution lumineuse au-delà de ladite région.

Selon un mode de réalisation au moins un nanoémetteur est un fluorophore avec une séquence d'intensités lumineuses de fluorescence qui dépend de l'intensité incidente de la séquence de distributions lumineuses compactes de familles topologiques différentes sur ledit fluorophore caractérisant ainsi la position spatiale dudit fluorophore.

Selon un autre mode de réalisation au moins deux des nanoémetteurs sont des fluorophores, localisés à différentes positions spatiales, chaque fluorophore avec une séquence d'intensités lumineuses de fluorescence qui dépend de l'intensité incidente de la séquence de distributions lumineuses compactes de familles topologiques différentes sur au moins deux fluorophores caractérisant ainsi la position spatiale d'au moins deux fluorophores.

Selon un mode de réalisation une région, dont la taille est nettement inférieure à la longueur d'onde $\lambda$ moyenne de la lumière réémise, existe dans l'échantillon, dans laquelle une comparaison d'une pluralité de combinaisons mathématiques de ladite séquence de distributions lumineuses compactes de familles topologiques différentes, permet de différencier entre au moins un des éléments suivants:

a) un nanoémetteur lumineux unique;

b) une pluralité de nanoémetteurs lumineux collocalisés; et

c) une pluralité de nanoémetteurs lumineux -situé à une distance de l'autre, déterminant ainsi la distance entre les nanoémetteurs lumineux.

Selon un mode de réalisation le procédé comporte en outre la variation de la séquence dudit au moins deux distributions lumineuses, et/ou la position de la séquence dudit au moins deux distributions lumineuses en fonction de données mesurées ou d'information externes.

Selon un mode de réalisation la projection de distributions lumineuses de topologies différentes est effectuée par la diffraction conique et modifiée par une variation des états de polarisation d'entrée et de sortie d'un au moins un cristal conique effectuant la diffraction conique.

Selon un mode de réalisation la position spatiale mesurée d'au moins un nanoémetteur lumineux est la position latérale dudit au moins un nanoémetteur lumineux.

Un deuxième aspect de l'invention propose un procédé optique de mesure pour déterminer la position spatiale d'une pluralité de sources lumineuses ponctuelles le procédé comportant la détection de la lumière émise par la pluralité des sources lumineuses ponctuelles ; et la séparation de la lumière émise sur une pluralité de détecteurs pour des détections simultanées ou séquentielles ; la proportion de la lumière émise par un source lumineuse ponctuelle, canalisée vers un détecteur spécifique, étant dépendant de la position spatiale dudit source lumineuse ponctuelle; et la génération, des images optiques, à partir de la lumière détectée ; et l'analyse algorithmique des images optiques pour obtenir une information de localisation de la pluralité des sources lumineuses ponctuelles.

Selon un mode de réalisation chaque source lumineuse ponctuelle correspond à un ou plusieurs nanoémetteurs de l'échantillon et le procédé comporte une étape préliminaire comprenant l'illumination des nanoémetteurs de l'échantillon par une lumière incidente pour la détection de la lumière réémise par les nanoémetteurs pour la localisation des nanoémetteurs.

Selon un mode de réalisation la position spatiale mesurée est la position longitudinale de chaque source lumineuse ponctuelle ou nanoémetteur lumineux.

Selon un mode de réalisation la lumière émise est séparée en fonction de la position longitudinale de chaque source lumineuse ponctuelle ou nanoémetteur ou en fonction de la longueur d'onde émise par chaque source lumineuse ponctuelle ou nanoémetteur.

Selon un mode de réalisation la séparation de la lumière émise est effectuée de façon à séparer, sur une pluralité de canaux de détection, la lumière émise collimatée, émergente des sources lumineuses ponctuelles positionnées au plan focal de l'objectif, de la lumière réémise non-collimatée émergente des sources lumineuses ponctuelles ou se trouvant en deca ou au-delà du plan focal.

Selon un mode de réalisation le procédé comporte en outre la variation des paramètres des canaux de détection en fonction des données mesurées ou d'information externe.

Selon un mode de réalisation le procédé comporte en outre au moins un des étapes suivantes:

la génération, à partir de chaque source lumineuse ponctuelle, d'un faisceau de lumière quasi-parallèle, le faisceau de lumière se différenciant de la lumière parallèle par un angle de convergence ou de divergence, la valeur de l'angle étant fonction de la position longitudinale de chaque source lumineuse ponctuelle;

la génération, à partir d'une onde lumineuse incidente, deux ondes lumineuses collocalisées, de polarisations orthogonales et de géométries différentes, l'une régulière et l'autre singulière, le ratio de l'énergie entre les ondes régulière et singulière étant fonction de l'angle de convergence ou divergence du faisceau lumineux et à travers lui de la position longitudinale de la source ponctuelle; et

la modification de la polarisation ou de la géométrie apte à séparer les ondes régulière et singulière basé sur un état de polarisation de celles-ci ou sur une forme géométrique de celles-ci.

Selon un mode de réalisation le procédé comporte en outre la séparation des intensités de lumière réémise de la pluralité de sources lumineuses ponctuelles, en une pluralité de canaux indépendants avec des polarisations orthogonales, en utilisant un séparateur de faisceau de polarisation, et la fusion des intensités de lumière émergeantes de chaque canal, de sorte que la dépendance de la position longitudinale de la polarisation ou de la canalisation géométrique de l'intensité lumineuse est préservée dans la lumière issue de la fusion.

Selon un mode de réalisation le procédé comporte en outre la focalisation des sources ponctuelles lumineuses placées à une position longitudinale donnée ; et la défocalisation des sources lumineuses ponctuelles positionnées avant et après ladite position longitudinale, la distribution de lumière différant de la focalisation en dépendance de la position longitudinale de chaque source ponctuelle.

Selon un mode de réalisation le procédé comporte en outre la génération, à partir de l'onde lumineuse incidente, deux ondes lumineuses de différentes polarisations, le ratio de l'énergie entre les ondes de différentes polarisations étant fonction de la répartition spatiale au point de focalisation et à travers elle de la position longitudinale de la source lumineuse ponctuelle; et la séparation des ondes régulières et singulières sur la base, de son état de polarisation ou de sa forme géométrique.

Selon un mode de réalisation la détection de la lumière émise ou réémise est limitée dans le plan focal de l'objectif du microscope

Selon un mode de réalisation ledit au moins image optique est générée à l'aide de l'optique d'un microscope, par exemple un microscope confocale

Un troisième aspect de l'invention propose un dispositif optique de mesure pour déterminer la position spatiale d'au moins un nanoémetteur lumineux positionné d'un échantillon, le dispositif comportant :

des moyens de projection aptes à projeter une séquence d'au moins deux distributions lumineuses compactes de familles topologiques différentes sur l'échantillon;
des moyens de détection aptes à détecter la lumière réémise par ledit au moins un nanoémetteur lumineux de l'échantillon ;
des moyens de génération aptes à générer au moins une image optique pour chaque distribution lumineuse, à partir de la lumière détectée ; et
des moyens d'analyse aptes à effectuer une analyse algorithmique des images optiques pour obtenir une information de localisation dudit au moins un nanoémetteur lumineux.

Selon un mode de réalisation les moyens de projections sont configurés pour collocaliser les deux distributions lumineuses compactes sur l'échantillon.

Selon un mode de réalisation les moyens de projection sont aptes à créer lesdites au moins deux distributions lumineuses par une interférence entre une onde régulière et une onde singulière ou entre deux ondes singulières, et à créer une différenciation spatiale entre lesdites au moins deux distributions en faisant varier au moins un des paramètres suivants:

a) au moins un des paramètres de l'onde régulière;

b) au moins un paramètre d'au moins une onde singulière et

c) une différence de phase entre l'onde régulière et l'onde singulière, ou entre deux ondes singulières.

Selon un mode de réalisation le dispositif comporte un sous-module cristallin, pour créer à partir d'une onde lumineuse incidente, deux ondes lumineuses collocalisées, une régulière et une singulière, ledit sous-module cristallin comprenant un cristal biaxe mince et/ou un cristal uniaxe.

Selon un mode de réalisation le dispositif comporte un sous-module optique apte à séparer une onde incidente régulière, en deux ondes régulières suivant des trajets géométriques séparés, ce sous module étant configuré pour transformer, au moins une des ondes optiques régulières en une onde optique singulière, en utilisant des moyens de transformation comprenant au moins: un réseau à pas inférieur à la longueur d'onde moyenne de la lumière réémise, et un cristal uniaxe ou biaxe mince, et dans lequel le sous module optique est conçu pour fusionner les deux ondes optiques émergeantes créées.

Selon un mode de réalisation le dispositif comporte un polariseur partiel, adapté à contrôler l'amplitude relative des ondes régulières et singulières et éventuellement à translater la position centrale de la distribution lumineuse d'une onde par rapport à l'autre.

Selon un mode de réalisation le dispositif comporte un sous-module de contrôle optique d'amplitude, polarisation ou phase, composé d'au moins un élément optique réglable ou contrôlable, capable de contrôler, dans une séquence prédéterminée, la polarisation et / ou état de phase de l'onde lumineuse d'entrée ou de sortie du sous-module cristallin.

Selon un mode de réalisation le dispositif comporte un sous-module de contrôle, composé d'au moins un élément optique réglable, capable de contrôler, la forme des ondes régulières ou singulières.

Selon un mode de réalisation le dispositif comporte un analyseur de polarisation et/ou un sous module de mise en forme, statique ou dynamique, de la polarisation émergeante desdites distributions lumineuses, en mesure d'atténuer les effets vectoriels, sur la forme et la taille de chaque distribution lumineuse compacte, effets créés par une grande ouverture numérique de l'objectif des moyens de génération des images optiques, en façonnant la polarisation émergeante en fournissant un état de polarisation statique à symétrie de rotation telle que les polarisations circulaire, radiale ou azimutale et / ou un état de polarisation dynamique.

Selon un mode de réalisation une région d'une taille sensiblement inférieure à la longueur d'onde $\lambda$ moyenne de la lumière réémise existe dans l'échantillon , dans laquelle la valeur d'une combinaison mathématique spécifique des intensités des au moins deux distributions lumineuses compactes de familles topologiques différentes créés par les moyens de projection est positive pour les positions latérales inclus dans ladite région, et dans lequel ladite combinaison mathématique spécifique est proche de zéro dans toutes les autres parties de la distribution lumineuse au-delà de ladite région.

Selon un mode de réalisation au moins un nanoémetteur est un fluorophoreavec une séquence d'intensités lumineuses de fluorescence qui dépend de l'intensité incidente de la séquence de distributions lumineuses compactes de familles topologiques différentes sur ledit fluorophore caractérisant ainsi la position spatiale dudit fluorophore.

Selon un mode de réalisation au moins deux des nanoémetteurs sont des fluorophores, localisés à différentes positions spatiales, chaque fluorophoreavec une séquence d'intensités lumineuses de fluorescence qui dépend de l'intensité incidente de la séquence de distributions lumineuses compactes de familles topologiques différentes sur au moins deux fluorophores caractérisant ainsi la position spatiale d'au moins deux fluorophores.

Selon un mode de réalisation une région, dont la taille est nettement inférieure à la longueur d'onde $\lambda$ moyenne de la lumière émise, existe dans l'échantillon, et comportant en outre un comparateur pour effectuer une comparaison d'une pluralité de combinaisons mathématiques de ladite séquence de distributions lumineuses compactes de familles topologiques différentes, pour différencier entre au moins un des éléments suivants:

a) un nanoémetteur lumineux unique;
b) une pluralité de nanoémetteurs lumineux collocalisés; et
c) une pluralité de nanomarqueurs lumineux -situé à une distance de l'autre, déterminant ainsi la distance entre les nanomarqueurs lumineux.

Selon un mode de réalisation les moyens de projection sont configurés pour varier la séquence dudit au moins deux distributions lumineuses, et/ou la position de la séquence dudit au moins deux distributions lumineuses en fonction de données mesurées ou d'information externes.

Selon un mode de réalisation les moyens de projection comprennent au moins un cristal conique pour effectuer une diffraction conique et des moyens pour faire varier les états de polarisation d'entrée et de sortie dudit au moins un cristal conique.

Selon un mode de réalisation configuré pour mesurer la position latérale dudit au moins un nanoémetteur lumineux.

Selon un quatrième aspect, l'invention propose un dispositif optique de mesure pour déterminer la position spatiale d'une pluralité de sources lumineuses ponctuelles, le dispositif comportant

des moyens de détection aptes à détecter la lumière émise par la pluralité des sources lumineuses ponctuelles ; et

des moyens de séparation aptes à séparer la lumière réémise sur une pluralité de détecteurs pour des détections simultanées ou séquentielles ; la proportion de la lumière réémise par un nanoémetteur lumineux, canalisée vers un détecteur spécifique, étant dépendant de la position spatiale dudit nanoémetteur lumineux ; et

des moyens de génération d'image aptes à générer des images optiques, à partir de la lumière détectée ; et

des moyens d'analyse aptes à effectuer une analyse algorithmique des images optiques pour obtenir une information de localisation de la pluralité des sources lumineuses ponctuelles lumineux.

Selon un mode de réalisation le dispositif est configuré pour mesurer la position longitudinale de chaque source lumineuse ponctuelle.

Selon un mode de réalisation une source ponctuelle comprend un ou plusieurs nanoémetteurs de l'échantillon et le dispositif comporte des moyens d'illumination aptes à illuminer les nanoémetteurs de l'échantillon par une lumière incidente, et des moyens de détection sont aptes à détecter la lumière réémise par les nanoémetteurs pour la localisation des nanoémetteurs. Un nanoémetteur peut être une fluorophore, par exemple.

Selon un mode de réalisation les moyens de séparation sont configurés pour séparer la lumière réémise en fonction de la position longitudinale de chaque source lumineuse ponctuelle ou en fonction de la longueur d'onde émise par chaque source lumineuse ponctuelle.

Selon un mode de réalisation les moyens de séparation sont configurés pour séparer, sur une pluralité de canaux de détection, la lumière réémise collimatée, émergente des sources lumineuses ponctuelles positionnées au plan focal de l'objectif, de la lumière réémise non-collimatée émergente des sources lumineuses ponctuelles se trouvant en deca ou au-delà du plan focal.

Selon un mode de réalisation le dispositif comporte en outre des moyens de variation pour varier des paramètres des canaux de détection en fonction des données mesurées ou d'information externe.

Selon un mode de réalisation le dispositif comporte en outre des moyens de canalisation aptes à canaliser les intensités lumineuses provenant de la pluralité de sources ponctuelles de la lumière émise, placé dans un petit volume lumineux, sur des détecteurs séparés, et/ou sur des positions géométriques distinctes sur le même détecteur, en fonction de la position longitudinale de chaque source ponctuelle.

Selon un mode de réalisation le dispositif comporte en outre un sous module s'interfaçant à un objectif de microscope et à un sous-module de détection et l'un à l'autre, par des optiques auxiliaires.

Selon un mode de réalisation le dispositif comporte des moyens optiques aptes à créer, à partir de chaque source ponctuelle de la lumière émise, un faisceau de lumière quasi- parallèle, le faisceau de lumière se différenciant de la lumière parallèle par un angle de convergence ou de divergence, la valeur de l'angle étant fonction de la position longitudinale de chaque source lumineuse ponctuelle.

Selon un mode de réalisation le dispositif comporte un sous-module cristallin, ou une cascade de sous-modules cristallins, chaque sous-module cristallin, composé d'un cristal biaxe et/ou un cristal uniaxe, et d'optiques auxiliaires, le susdit sous-module cristallin étant adapté pour créer à partir de l'onde lumineuse incidente deux ondes lumineuses collocalisées, de polarisations orthogonales et de géométries différentes, l'une régulière et l'autre singulière, le ratio de l'énergie entre les ondes régulière et singulière étant fonction de l'angle de convergence ou divergence du faisceau lumineux et à travers lui de la position longitudinale de la source ponctuelle émettrice.

Selon un mode de réalisation le dispositif comporte des moyens de modification de la polarisation ou de la géométrie apte à séparer les ondes régulière et singulière basé sur un état de polarisation de celles-ci ou sur une forme géométrique de celles-ci.

Selon un mode de réalisation le dispositif comporte

un séparateur de faisceau de polarisation pour séparer les intensités de lumière d'une pluralité de sources ponctuelles de la lumière émise, faisant partie d'un module de superrésolution longitudinale en deux canaux indépendants avec des polarisations orthogonales, et

des moyens pour fusionner les intensités de lumière émergeantes du module de superrésolution longitudinale, dans chaque canal, de sorte que la dépendance de la position longitudinale de la polarisation ou de la canalisation géométrique de l'intensité lumineuse est préservée dans la lumière issue de la fusion.

Selon un mode de réalisation le dispositif comporte des moyens optiques aptes à focaliser des sources ponctuelles lumineuses de la lumière réémise placées à une position longitudinale donnée et de défocaliser légèrement les sources lumineuses ponctuelles de la lumière réémise positionnées avant et après ladite position longitudinale, la distribution de lumière différant de la focalisation en dépendance de la position longitudinale de chaque source ponctuelle.

Selon un mode de réalisation le dispositif comporte des moyens de polarisation variant spatialement et comportant au moins un cristal uniaxe d'épaisseur variable, un réseau de pas inférieur à la longueur d'onde moyenne de la lumière réémise et/ou d'une lame de phase, créant à partir de l'onde lumineuse incidente deux ondes lumineuses de différentes polarisations, le ratio de l'énergie entre les ondes de différentes polarisations étant fonction de la répartition spatiale au point de focalisation et à travers elle de la position longitudinale de la source ponctuelle émettrice.

Selon un mode de réalisation le dispositif comporte des moyens de polarisation ou de géométrie, capable de séparer, les ondes régulières et singulières sur la base de leurs états de polarisation ou de leurs formes géométriques.

Selon un cinquième aspect, l'invention propose un appareil optique de mesure pour déterminer la position spatiale d'au moins un nanoémetteur lumineux d'un échantillon, comportant un microscope, par exemple un microscope confocal ; un dispositif de mesure selon un mode de réalisation du troisième aspect de l'invention ; et/ou un dispositif de mesure selon un mode de réalisation du quatrième aspect de l'invention.

Selon un sixième aspect, l'invention propose un procédé de mesure optique pour déterminer la position spatiale d'au moins un nanoémetteur lumineux d'un échantillon, comportant un procédé de mesure selon un mode de réalisation du premier aspect de l'invention pour déterminer la position latérale d'au moins un nanoémetteur dans un échantillon ; et un procédé de mesure selon un mode de réalisation du deuxième aspect de l'invention pour déterminer la position longitudinale d'au moins un nanoémetteur dans un échantillon.

Selon un autre aspect, l'invention propose un procédé de mesure optique comportant la projection séquentielle d'au moins deux distributions lumineuses compactes de familles topologiques sur un échantillon.

Selon un autre aspect, l'invention propose un appareil pour effectuer une mesure optique comportant un projecteur pour effectuer une projection séquentielle d'au moins deux distributions lumineuses compactes de familles topologiques différentes sur un échantillon.

Selon un autre aspect, l'invention propose un système optique configuré pour créer de façon séquentielle, sur un échantillon, au moins deux distributions lumineuses séparées spatialement l'une de l'autre, chacune des dites distributions ayant un diamètre inférieur à 1,5 fois la longueur d'onde moyenne de la lumière réémise de l'échantillon, tel que des combinaisons des intensités desdites distributions créent des caractéristiques localisées d'une taille inférieur à 0,5 ladite longueur d'onde moyenne.

Selon un autre aspect, l'invention propose un système optique comprenant un appareil optique et une région de mesure illuminée, l'appareil optique étant configuré pour créer de façon séquentielle au moins deux distributions lumineuses séparées spatialement l'une de l'autre, et définissant un ensemble de points dans la région de mesure comprenant tous les points d'intensité nulle à l'une ou l'autre des distributions, un point localisé dans la région de mesure proche à une point dudit ensemble étant inférieur ou égale à 0,5 du rayon de la région de mesure.

Selon un autre aspect, l'invention propose un système optique comprenant un appareil optique et une région de mesure à illuminer, l'appareil optique étant configuré pour créer de façon séquentielle au moins deux distributions lumineuses différenciés spatialement l'une de l'autre

et définissant un ensemble de points dans la région de mesure illuminée, comprenant tous les points d'intensité nulle et d'intensité locale maximum à l'une ou l'autre des distributions, un point localisé proche à un point dudit ensemble étant inférieur ou égale à 1/6 du diamètre de la région de mesure.

Selon un autre aspect, l'invention propose un appareil optique, et une région de mesure compacte ayant une ligne passant à travers le centre de la région de mesure, l'appareil optique étant configuré pour créer une distribution de lumière spatialement différenciée, le rapport d'énergie entre l'intensité au long de la ligne passe par un maximum, un minimum et un autre maximum.

Selon un autre aspect, l'invention propose un module de superrésolution latérale, comprenant un appareil optique adapté à créer séquentiellement au moins deux spots lumineux différenciés spatialement d'un diamètre inférieur à 1,5 fois la longueur d'onde, $\lambda$ moyenne émise, tels que les combinaisons des intensités desdits spots créent des détails localisés d'une taille inférieure à 40% de cette longueur d'onde, $\lambda$.

Un but d'au moins un mode de réalisation est de fournir un nouvel appareil, un module de superrésolution latérale, comprenant un appareil optique adapté pour créer au moins deux spots de lumière spatialement différenciée d'un diamètre inférieur à 1,5 fois la longueur d'onde, $\lambda$, tels que des combinaisons de l'intensité des desdits spots localisés caractéristiques sont de taille inférieure à 40% de cette longueur d'onde, $\lambda$.

Un autre but est de fournir un système de vision, référencé comme un module superrésolution longitudinale, configuré pour modifier au moins l'un de la géométrie, la polarisation ou la géométrie et la polarisation d'un faisceau de lumière émergeant d'une source ponctuelle en fonction de la position longitudinale d'une source ponctuelle.

Un autre but d'au moins un mode de réalisation est de fournir un système de superrésolution en microscopie de fluorescence comprenant le module de superrésolution latérale incorporé dans la voie d'éclairage du microscope, projetant sur un échantillon constitué d'une pluralité de fluorophores, placés à différentes positions latérales dans la distribution lumineuse compacte, une séquence de spots lumineux spatialement différenciés de taille de l'ordre de la demi longueur d'onde, chacun des fluorophores fluoresçant avec une séquence d'intensités lumineuses fluorescentes dépendant de façon linéaire ou non linéaire de la lumière incidente sur le fluorophore et caractérisant une position latérale du fluorophore.

Un autre but d'au moins un mode de réalisation est de fournir un système de superrésolution en microscopie de fluorescence comprenant le module de superrésolution longitudinale incorporé dans la voie de détection du microscope, dans lequel les intensités lumineuses émergeantes d'une pluralité de sources ponctuelles, placées dans un petit volume illuminé, sont séparées soit sur des détecteurs séparés soit sur des positions géométriques distinctes sur le même détecteur soit sur une combinaison des deux.

Un autre but d'au moins un mode de réalisation est de fournir un système de superrésolution en microscopie de fluorescence, le système comprenant soit un module de superrésolution latéral positionné dans la voie d'éclairage dudit système de superrésolution en microscopie de fluorescence et / ou un module de superrésolution longitudinale positionné incorporés dans la voie de détection du microscope dans un circuit de détection dudit microscope à fluorescence de superrésolution.

Certains modes de réalisation de la présente invention concernent une technique nouvelle de superrésolution basée sur deux modules optiques nouveaux et complémentaires, référencés ici module latéral de superrésolution et module longitudinal de superrésolution Le module latéral de superrésolution fournit principalement une résolution latérale additionnelle et le module de superrésolution longitudinale fournit principalement une résolution longitudinale. Des modes de réalisation utilisant un des modules peuvent également être mises en oeuvre. Les deux modules optiques sont complétées par l'algorithmique adéquat et d'un module de détection amélioré. Les modules peuvent être intégrés sur des microscopes à fluorescence existants. Alternativement, des microscopes à fluorescence dédiés et optimisés, peuvent être développés autour du système de superrésolution en trois dimensions.

Les procédés et dispositifs pour la superrésolution, selon des modes de réalisation de la présente invention, s'écarte sensiblement des techniques classiques et des conceptions de l'art antérieur, et, ce faisant, fournissent un appareil développé dans le but de réaliser les techniques et les dispositifs de système de superrésolution capable de mesurer avec une grande précision les descripteurs d'un fluorophore et de reconnaître et de mesurer les descripteurs de plusieurs fluorophores placé dans le même volume illuminé.

La présente invention sera mieux comprise par la description détaillée qui suit de modes de réalisation préférés de celle-ci, pris conjointement avec les dessins.

D'autres objets et avantages de l'invention présente deviendront évidents pour le lecteur, et il est considéré que ces objets et ces avantages fassent partie de la présente invention.

BREVE DESCRIPTION DES DESSINS

L'invention va maintenant être décrite en relation avec certains modes de réalisation préférés en référence aux figures illustratives suivantes de sorte qu'elle puisse être mieux comprise.

Avec une référence spécifique à présent aux figures en détail, il est souligné que les indications figurantes sont présentées à titre d'exemple, et à des fins d'illustration de la discussion des modes de réalisation préférés de l'invention et ne sont présentés que dans le but de fournir ce qui est puisse être considéré la description la plus utile et facile à comprendre des principes et des aspects conceptuels de l'invention. À cet égard, aucune tentative n'est faite pour montrer des détails de structure de l'invention plus en détail que ce qui est nécessaire pour une compréhension fondamentale de l'invention, la description prise avec les dessins faisant apparaître à l'homme de l'art comment les différentes formes de l'invention peut être réalisée dans la pratique.

Dans les dessins:

Fig. 1 est une représentation simplifiée en perspective d'un microscope à fluorescence confocal de l'art antérieur;

Fig. 2 est une représentation picturale simplifiée d'un système de superrésolution en microscopie de fluorescence, conformément à un mode de réalisation de la présente invention;

Fig. 3 est une illustration schématique simplifiée d'un setup d'un module de diffraction conique, conformément à un mode de réalisation de la présente invention;

Fig. 4 est une représentation picturale simplifiée des deux paradigmes de mesure, utilisant la microscopie confocale et la méthodologie ;

Fig. 5 est une représentation picturale simplifiée de l'implémentation préférée de la méthodologie de mesure , à plateforme de microscopie SRCDP

Fig. 6 est une illustration schématique simplifiée d'un module latéral de superrésolution, conformément à un mode de réalisation de la présente invention;

Fig. 7 présente des tables de distributions lumineuses d'un module de diffraction conique en fonction de la polarisation des polariseurs d'entrée et de sortie pour plusieurs valeurs du paramètre de diffraction conique, po. Ces distributions lumineuses ont été calculées en utilisant le logiciel DIFFRACT de MMresearch Corp.

Fig. 8 est une illustration schématique simplifiée d'un module longitudinal de superrésolution, conformément à un mode de réalisation de la présente invention

Fig. 9 est une illustration schématique simplifiée d'une méthode d'algorithme de superrésolution de données de fluorophores, conformément à un mode de réalisation de la présente invention.

Fig. 10 est une illustration schématique simplifiée du calcul du descripteurs $\rho$

Fig. 11 est une illustration schématique simplifiée du module de contrôle de la plateforme SRCDP.

Dans toutes les figures, des chiffres de référence similaires identifient des pièces similaires.

## DEFINITIONS ET COMPLEMENTS TECHNIQUES

Les définitions usuelles sont utilisées dans la description pour: phase et polarisation, polarimétrie, paramètres de Stokes et techniques de mesure des paramètres de Stokes.
Le centre ou centroïde d'une distribution de lumière est le centre de gravité de l'intensité. Le diamètre d'une distribution de lumière est le diamètre du premier zéro d'intensité, pour des ondes régulières et singulières, sans prendre en compte le zéro central de l'onde singulière. Deux distributions de lumière sont collocalisées si leurs centres coïncident ou sont séparés par une valeur spatiale fixe, prédéterminée.
Dans ce document, nous utiliserons la longueur d'onde d'émission, comme métrique de base du système.
Dans ce document, les définitions usuelles sont utilisées pour les composants optiques suivants : lentille dont la définition est élargie, pour inclure l'ensemble des moyens optiques qui transmettent, réfractent ou réfléchissent la lumière, optique auxiliaire - sous-module optique visant à interfacer et à ajuster soit les paramètres géométriques soit les paramètres de phase et/ou de polarisation entre deux autres sous-modules ou modules optiques -, polariseur, analyseur, lame de retard, séparateur de faisceau beamsplitter en anglais, polarisant et non-polarisant, combineur de faisceau beam combiner en anglais, polarisant et non-polarisant.
Nous nous référons à un polariseur partiel pour décrire un élément ou un module dont l'absorption est différente pour les deux polarisations linéaires dichroïsme linéaire ou pour les deux polarisations circulaires dichroïsme circulaire.
Nous nous référons à des sous-modules dynamiques de polarisation ou de phase, pour décrire les moyens optiques dont les propriétés de polarisation ou de phase varient en fonction du temps de façon contrôlée, de façon discrète ou continue.
Ces sous-modules dynamiques de polarisation ou de phase comprennent, mais ne sont pas limités à: lames d'onde tournante sur leur axe, valves de lumière basées sur des technologies à cristaux liquides, dispositifs électro-optiques, connus aussi comme cellules de Pockels, cellules de Kerr, dispositifs électro-optiques résonnants, dispositifs magnéto-optiques, connus également en tant que cellules de Faraday, dispositifs acousto- ou élasto- optiques ou toute combinaison de ces moyens.
Nous nous referons a l' « algorithme du centroide » pour décrire la procédure usuelle de mesure du centroïde et éventuellement de la largeur (FWHM - acronyme en anglais pour « Full width Half Maximum ») d'une distribution lumineuse. De nombreux articles ont été publiés sur cet algorithme comme par exemple l'article de Lindegren en 1978, [5].
Cet algorithme, a sa source dans l'Astronomie et l'Astrométrie, et a permis la mesure de la position des étoiles avec une très grande précision. Cette algorithme est utilisé aujourd'hui dans l'ensemble de l'instrumentation optique, y compris en Biologie de superrésolution.
Dans ce document, les définitions usuelles sont utilisées pour les composants optoélectroniques suivants : détecteur photoélectrique, CCD, EMCCD, CMOS, SPAD Single Photon Avalanche Diode et matrice de SPAD.
Nous utiliserons les termes:

   ○ image optique, pour la distribution spatiale d'intensité lumineuse,
   ○ image électronique, pour décrire la distribution spatiale de charges pour un CCD, de courant pour un CMOS ou d'évènements pour un SPAD, créées par l'image optique, à un instant donné, dans un plan de détection,
   ○ image numérique, pour décrire une matrice de nombres créée par la numérisation de l'image électronique.

Pour simplifier la lecture et la compréhension du texte nous utiliserons aussi le terme d'image pour la sortie d'un détecteur à pixel unique tel qu'un PMT ou SPAD, en la considérant comme une image consistant en un unique pixel.
Lorsqu'aucune ambiguïté n'existe, ou que la distinction entre les trois types d'images n'est pas nécessaire, nous utiliserons le terme simplifié générique d'image.
Les images détaillées dans ce document peuvent être qualifiées des microimages, des images de taille sensiblement égale à un petit nombre de diamètres du disque d'Airy, typiquement inférieur à 5 diamètres, et/ou à faible nombre de pixels, typiquement 4*4 à 32*32.

Dans une image numérique $A_j$, les indices m et n représentent les indices des pixels ; l'origine des pixels sera choisie comme la projection du centre du volume d'analyse défini dans un paragraphe ultérieur.

Nous avons présentés les images en utilisant la terminologie utilisée pour les détecteurs matriciels, tels que les CCD, les EMCCD et les CMOS. Pour les SPAD et les matrices de SPAD, le résultat d'une mesure est une liste ordonnée dans le temps, d'impacts de photons détaillant, pour chaque photon, le temps d'impact et la position de l'impact. Pour simplifier la présentation de ce document, nous inclurons ce cas dans notre définition des images.

*Polarimétrie et vecteur de Stokes*

La polarimétrie se réfère à la mesure de l'état de polarisation de la lumière incidente. L'état de polarisation de la lumière incidente peut être décrit par les paramètres de Stokes, un ensemble de valeurs, introduit par George Gabriel Stokes en 1852, et utilisé en Optique.

**Compléments techniques connus de l'Homme de l'Art**

Dans ce chapitre nous reprenons un ensemble d'éléments techniques nécessaires à la description de l'invention et connus de l'Homme de l'Art.

*Coordonnés cartésiennes et polaires*

Les coordonnées polaires d'un point, $\rho$, $\theta$, se déduisent des coordonnées cartésiennes x, y à l'aide de l'équation :

$$\rho^2 = x^2 + y^2; \ \theta = \tan^{-1}\left(\frac{y}{x}\right) \qquad (EQ. 1)$$

*Champ électrique en coordonnées polaires et modes angulaires*

Soit un champ électrique complexe vectoriel, $E(\rho,\theta)$, décrit en coordonnées polaires $(\rho, \theta)$ ; le champ électrique peut être représenté par une amplitude réelle, $A(\rho,\theta)$, une phase réelle $\varphi(\rho,\theta)$ et un vecteur unité de polarisation, $\mathbf{u}(r,\theta)$:

$$\mathbf{E}(\rho,\theta) = A(\rho,\theta) \bullet \exp\left[i \, \varphi(\rho,\theta)\right] \mathbf{u}(\rho,\theta) \qquad (EQ. 2)$$

Il est usuel en Optique de décomposer les composantes du Champ, soit son amplitude, sa phase et sa polarisation, en modes orthogonaux, cartésiens ou polaires.

De nombreuses décompositions en modes orthogonaux polaires, tels que les modes Gaussiens, Hermite-Gaussiens, et Laguerre-Gaussiens sont connus de l'Homme de l'Art.

Nous utiliserons principalement dans ce document, la décomposition de l'amplitude du champ électrique en modes Hypergéométriques-Gaussiens HyGG de forme :

$$A(\rho,\theta) \propto \rho^{p+|m|} \exp\left(-\rho^2 + i\ell\theta\right) \qquad (EQ. 3)$$

Dans cette décomposition, p est le mode radial et $\ell$ l'ordre azimutal.

*Ondes singulières*

Une onde singulière comprend une intensité nulle en son centre et une variation de phase azimutale d'un multiple de $2\pi$. Ce thème de recherche en Optique, initié par l'article majeur de J.F Nye et M. Berry, en 1974, [6], est maintenant connu comme l'"optique singulière". Des exemples d'ondes régulières et singulières sont présentés dans la suite.

*Topologie et distributions lumineuses compactes*

Une distribution lumineuse, ponctuelle, sera réputée compacte si elle remplit une des conditions de compacité définies ci-dessous, par deux conditions alternatives et non exclusives :

soit, plus de 75% de l'énergie est contenue dans un cercle de rayon inférieur à 1.75 fois le rayon d'Airy;
soit un domaine lumineux, contenant plus de 65% de l'énergie est délimité par une ligne d'intensité nulle comprise dans un cercle de rayon inférieur à deux fois le rayon d'Airy,

Nous distinguons différentes familles de distributions lumineuses ponctuelles, de topologies différentes :

Les distributions régulières, dans leur définition usuelle en Optique,
Les distributions singulières, dénommées aussi vortices optiques, de charge topologique (ordre azimutal) $\ell$, dans lesquelles la phase varie de 0 à $2\pi \ell$, autour de la direction de propagation, $\ell$ étant un multiple entier.

Les distributions d'amplitude à variation azimutale d'ordre $\ell$, dénommées aussi distribution de Laguerre-Gauss, Les distributions de polarisation et optionnellement de phase à variation azimutale d'ordre $\ell$ dénommées aussi modes de Laguerre-Gauss polarisés radialement.

Deux distributions lumineuses compactes, seront réputées de familles topologiques différentes si elles remplissent au moins une, et n'importe laquelle, des conditions suivantes :

L'une est régulière et l'autre est singulière,
L'une est ponctuelle et l'autre est annulaire,
Les ordres azimutaux $\ell$ de l'amplitude des deux distributions lumineuses diffèrent,
Les ordres azimutaux $\ell$ de la polarisation ou de la phase des deux distributions lumineuses diffèrent.

Alternativement, deux distributions lumineuses projetées sur un volume donné seront réputées de topologies différentes si dans une partie conséquente de la surface illuminé conjointement, les gradients sont de direction inversées.

Les fluorophores sont l'exemple le plus connu de la famille des nanoémetteurs lumineux, émetteurs ponctuels de taille sensiblement inférieure à la limite de diffraction. Un nanoémetteur lumineux est un petit émetteur secondaire, attaché à un objet; il est de taille sensiblement inférieure à une fraction de longueur d'onde, typiquement mais non limité à une taille inférieure à un cinquième de la longueur d'onde ; un nanoémetteur lumineux absorbe l'énergie incidente et réémet de la lumière à la même longueur d'onde que la lumière incidente ou à des longueurs d'onde différentes ; la lumière émise par le nanoémetteur peut être cohérente, partiellement cohérente ou incohérente avec la lumière absorbée. Les principaux exemples de nanoémetteurs lumineux sont les fluorophores et les nanoparticules, mais ils incluent aussi un grand nombre d'autres éléments.

La définition, dans le contexte de l'invention, des nanoémetteurs lumineux est, déterminée par les deux conditions suivantes:

Création d'un émetteur lumineux secondaire ponctuel,
et

Positionnement prédéterminé de cet émetteur relativement à une entité, biologique ou organique.

Les mécanismes physiques qui peuvent créer un nanoémetteur sont nombreux ; ils incluent mais ne sont pas limités à l'absorption, la diffusion ou la réflexion, la fluorescence, «émission-déplétion», [7], les phénomènes de photo activation [8, 9], la fluorescence à deux ou plusieurs photons, [10], la diffusion élastique ou non, la diffusion Raman, ou à d'autres mécanismes physiques connues de l'Homme de l'Art. Nous utiliserons le terme émission de lumière pour décrire l'émission d'ondes électromagnétiques par le nanoémetteur lumineux, que la lumière soit cohérente, incohérente ou partiellement cohérente.

Nous étendrons notre définition des nanoémetteurs, en y incluant les particules diffusantes, absorbantes et réfléchissantes, attachées à une entité biologique ou organique ; l'action d'une particule diffusante, réfléchissante ou absorbante sur le champ électromagnétique peut en effet être décrite comme la création avec une phase inverse, suivant le principe de Babinet, pour une particule absorbante d'un champ secondaire auxiliaire, émergent de la particule, superposé au champ électromagnétique incident.

Nous nous référerons dans ce brevet aux descripteurs d'un fluorophore unique pour dénoter l'ensemble d'information décrivant un fluorophore en tant que source ponctuelle, à un instant déterminé. Etant donné que le nanoémetteur est considéré comme une source ponctuelle, l'ensemble de l'information le représentant contient un nombre limité de paramètres, soit : sa position dans l'espace, son intensité, les caractéristiques spectrales, d'intensité, de cohérence, de phase et de polarisation de la lumière émise par le fluorophore, en fonction de la lumière incidente.

Toutefois, dans la majorité des cas, et dans la description de l'invention, nous nous referons, sous la désignation de descripteurs, à un sous-ensemble des descripteurs d'un fluorophore comprenant sa position géométrique, son intensité, et le type du fluorophore, lorsque plusieurs populations de nanoémetteurs lumineux, différenciées par exemple par leur spectre d'émission, sont présentes dans un même échantillon. Cette simplification utilisée dans la description n'altère pas le domaine de l'invention qui inclura dans son champ d'application l'intégralité des descripteurs des nanoémetteurs lumineux.

Pour simplifier la compréhension du contexte de l'invention, la suite de la description référence seulement le cas le plus simple, celui dans lequel le nanoémetteur est un fluorophore et l'interaction physique est la fluorescence à un photon. Pourtant, cette description doit être comprise comme une illustration simplifiée d'une description générale des méthodes et concepts applicables à l'ensemble des nanoémetteurs lumineux cités préalablement ou connus de l'Homme de l'Art, quel que soit le phénomène physique sous-jacent.

Il est marquant que le nanoémetteur lumineux échantillonne le champ ou l'intensité incidente à une position tridimensionnelle précise, sans influence de l'ensemble de la distribution spatiale de l'intensité incidente. Nous référencerons cette propriété remarquable dans ce document comme la capacité d'échantillonnage du nanoémetteur lumineux.

On se réfère de nouveau à la Figure. 1 ; l'ensemble des fluorophores positionnés sur un objet biologique donné, 16 et 19 d'une part et 17 et 18 d'autre part, sont référencés comme des «objets biologiques lumineux»; ils représentent une carte de l'objet biologique, dans le sens défini par Alfred Korzybski en sémantique générale, [11]. Il est toutefois de pratique courante pour simplifier la description, de référencer l'objet biologique lumineux comme l'objet biologique-lui-même, lorsqu'aucune ambiguïté ne peut apparaitre.

L'objet biologique lumineux contient de nombreuses informations pertinentes liées à l'objet biologique, principalement l'information spatiotemporelle, la position de l'objet et son orientation en fonction du temps, et l'information morphologique, par exemple dans le cas de la scission d'une cellule en deux.

L'information primordiale, la carte dans la terminologie de la sémantique générale, est l'ensemble des descripteurs des fluorophores et leur évolution en fonction du temps. Les informations géométriques et biologiques ne seront que des extrapolations de cette information primordiale.

Le système de mesure permettra de calculer, une évaluation des descripteurs des fluorophores, la carte mesurée. Cette carte mesurée, diffère de la carte originale, en raison du bruit, des conditions de mesure, des limites du système ou de l'incertitude de mesure. Cette information carte peut être élaborée ultérieurement en différents niveaux d'abstraction.

La carte, le niveau de base, consiste donc en une évaluation des descripteurs d'un ensemble de fluorophores; cette information peut, par exemple être structurée sous la forme d'une liste de fluorophores et de leurs descripteurs. Ce niveau d'abstraction, qui décrit les résultats directs de la mesure, ne contient, à priori, aucune information biologique mais les résultats d'une mesure physique décrite par des points lumineux, qui pourrait d'ailleurs représenter n'importe quelle entité marquée.

Le second niveau, le niveau d'abstraction géométrique structure les nanoémetteurs sous forme d'objets géométriques. Il consiste en une description d'objets lumineux et de leurs caractéristiques dynamiques, telles que leur position ou orientation, ou leur morphologie. A ce niveau, l'information est encore une information physique et géométrique décrivant un ensemble d'objets. L'information géométrique utilise la carte mesurée et une information auxiliaire, potentiellement extérieure au système, sur la relation entre les points lumineux et des objets.

Le niveau d'abstraction biologique, permet une certaine appréhension de la réalité biologique grâce à une relation constitutive entre les objets mesurés et des entités biologiques correspondantes. Il contient un ensemble d'informations sur l'objet biologique, principalement la position et sa dynamique, sa forme et sa morphologie. L'information biologique utilise la carte mesurée et l'information géométrique, et une information auxiliaire, potentiellement extérieure au système, sur la relation des points lumineux et des objets aux entités biologiques. Un certain nombre de conclusions sur la fonctionnalité biologique de l'échantillon peut être obtenues à ce niveau.

La réfraction conique, est un phénomène optique prédit par Hamilton, [12], en 1832, et confirmé expérimentalement deux mois après par Lloyd, [13, 14]. La réfraction conique décrit la propagation d'un faisceau de lumière dans la direction de l'axe optique d'un cristal biaxe. Hamilton a prédit que la lumière émerge sous la forme d'un cône creux de rayons. La réfraction conique est une étape importante de l'histoire des sciences et a joué un rôle dans la démonstration de la théorie des ondes électromagnétiques.

Un regain d'intérêt pour la réfraction conique eu lieu dans les dernières années du XXe siècle; elle a abouti à une théorie complète par Berry et al. [15], [16, 17], validé expérimentalement en 2009, [18]. Nous suivons ici la théorie, la terminologie et les définitions de Berry, y compris le changement de dénomination de l'effet physique, à partir de ce point, utilisant le terme plus rigoureux de diffraction conique.

La diffraction conique a suscité un intérêt considérable au niveau théorique et expérimentale, mais, "aucune application pratique semble avoir été trouvé", [19].

Historiquement, la diffraction conique a été observée dans les cristaux biaxes. Nous nous référons à un cristal conique pour décrire un cristal biaxe inorganique ou organique, présentant le phénomène de diffraction conique. Quelques exemples non limitatifs de cristaux biaxes comprennent, l'Aragonite, KTP, KTA, LBO, KNbO3, MDT, YCOB, BIBO, DAST, POM, NPP, LAP, LiInS2 et LiInSe2.

D'autres effets existent, créant une diffraction conique intrinsèquement plus faible ou des effets créant une diffraction conique le long d'un trajet optique court. Ces effets comprennent les polymères, les cristaux liquides et les effets de biréfringence induite par voie externe. Les polymères comprennent mais ne sont pas limités à: les feuilles de polymère étirées et à la polymérisation en cascade, [20]; les cristaux liquides comprennent mais ne sont pas limités à: la phase nématique biaxe thermotrope, [21]; les effets externes de biréfringence induite comprennent, mais ne sont pas limités à: l'application d'un champ électrique créant un effet électro-optique, sur un cristal cubique non-centrosymétrique, [22], et le modulateur photo-élastique, [23].

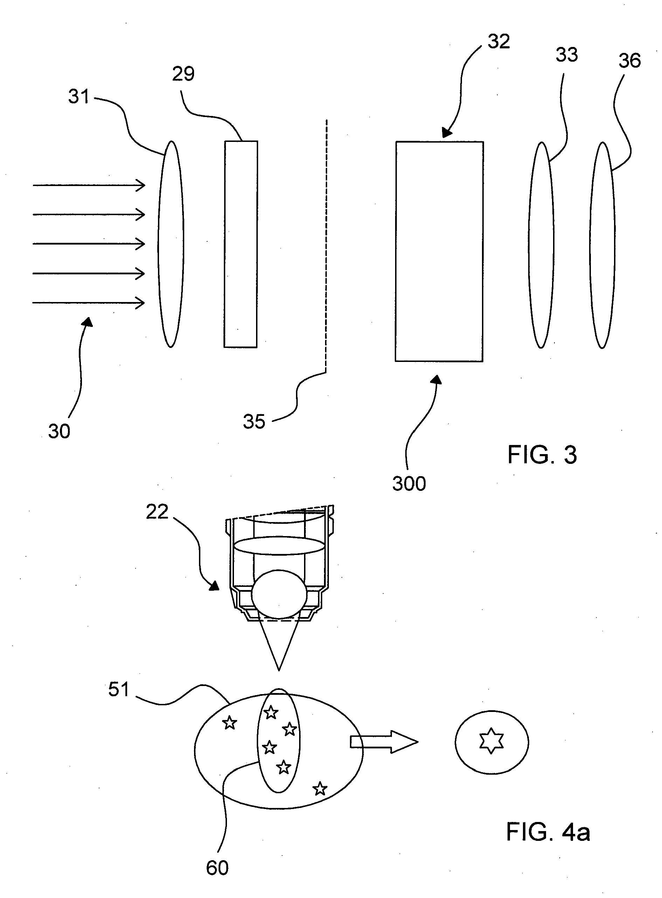

On se réfère maintenant à la figure 3, qui est une illustration schématique simplifiée d'une configuration d'un module de diffraction conique, 300, conformément à un mode de réalisation de la présente invention.

La lumière incidente, 30, est supposée être parallèle, même si d'autres conditions peuvent être adaptées en utilisant des moyens optiques simples. Le setup lui-même comprend une première lentille, 31, un cristal conique, 32 et une lentille optionnelle 33. Les deux premières lentilles, 31 et 33, sont configurées de préférence sous forme d'un télescope Kepler 1:1. L'ouverture numérique de la première lentille, 31, dans l'espace image, représentée ci-dessous par $U_0$, détermine les paramètres de l'effet conique à travers le rayon conique, défini ci-dessous. Un plan d'imagerie conique, 35, est placé au plan focal de la première lentille 31; un polariseur partiel, 29, décrit ci-dessus, peut également être ajouté. Une lentille de focalisation, 36, détermine l'échelle finale de la tache lumineuse. Elle peut être un objectif de microscope externe, ou peut être fusionnée avec la seconde lentille 33, telle qu'implémentée dans un autre modalité de cette invention. La répartition de la lumière projetée sur l'échantillon est, en première approximation, en négligeant les effets vectoriels, une image réduite de la distribution de la lumière dans le plan image. L'influence des effets vectoriels sera discutée ci-dessous. Le rapport d'échelle est déterminé pour un objectif de microscope par son grossissement.

Soit la variable spatiale, R, au plan d'imagerie conique, et le vecteur d'onde, U, représentées en coordonnées cylindriques par R, $\theta_R$ et U, $\theta_U$. Soit $\lambda$, la longueur d'onde de la lumière.

Le comportement du champ électrique émergeant du cristal conique 32 est entièrement caractérisé par un seul paramètre, le rayon conique, $R_0$; le rayon conique dépend du matériau et les caractéristiques géométriques du cristal, comme défini dans [Berry, 2004].

Nous introduisons des paramètres normalisés permettant à la description ci-dessous de la répartition de la lumière, d'être valide à la fois au plan d'imagerie conique et au foyer de l'objectif du microscope, dans les limites de la théorie scalaire de diffraction.

La position radiale normalisée, $\rho$, le vecteur d'onde normalisée, u, représentés en coordonnées cylindriques par $\rho$, $\theta_R$ et u, $\theta_U$, et le rayon normalisé conique, $\rho_0$, sont donnés par:

$$\boldsymbol{\rho} = 2\frac{\mathbf{R}}{\lambda}U_0, \qquad \mathbf{u} = \frac{\mathbf{U}}{U_0}; \qquad \rho_0 = 2\frac{R_0}{\lambda}U_0. \qquad \text{(EQ. 4)}$$

$U_0$ étant l'ouverture numérique du système. Pour $\rho_0 < 2$, nous faisons référence ici à un cristal conique mince; pour $\rho_0 \ll 1$, nous nous référons ici à la forme d'un cristal conique mince linéaire, et pour $\rho_0 < 0.5$ à un cristal conique mince sinusoïdal.

L'onde émergeante du cristal conique mince, E($\rho$, $\theta_R$), exprimée en coordonnées normalisées, est constituée par la superposition de deux ondes, référencées ici comme l'onde fondamentale, $E_F(\rho)$, une onde régulière, et l'onde vortex , $E_V(\rho,\theta_R)$, une onde singulière; ces deux ondes sont cohérentes l'une avec l'autre, collocalisées, polarisées circulairement et de chiralité inverse :

$$\mathbf{E}(\rho,\theta_R) = \mathbf{E}_F(\rho) + \mathbf{E}_V(\rho,\theta_R) = E_F(\rho)\begin{pmatrix} 1 \\ -i \end{pmatrix} + F_V(\rho)\exp\left(-i\theta_R\right)\begin{pmatrix} 1 \\ i \end{pmatrix} \qquad \text{(EQ. 5)}$$

Dans cette équation, $E_F(\rho)$ est l'amplitude fondamentale scalaire, $F_V(\rho)$ est l'amplitude scalaire de vortex réduite; elles sont donnés par:

$$E_F(\rho) = 2\pi \int du\, u\, \cos(\rho_0 u) J_0(\rho u); \qquad F_V(\rho) = 2\pi \int du\, u\, \sin(\rho_0 u)\, J_1(\rho u). \qquad \text{(EQ. 6)}$$

Pour un cristal conique mince linéaire, l'onde fondamentale peut être approximée par une tache d'Airy et l'onde de vortex peut être approximée à un vortex linéaire, représenté par:

$$F_V(\rho) = 2\pi\rho_0 \int du\, u^2\, J_1(\rho u). \qquad \text{(EQ. 7)}$$

En supposant que l'action du polariseur partiel, 29, est la mise à l'échelle de l'onde vortex par α, les paramètres de Stokes peuvent être déduits des équations précédentes:

(EQ. 8)

$$S_0 = \left(E_F(\rho)\right)^2 + \left(\alpha^2 F_V(\rho)\right)^2$$
$$S_1 = 2\alpha E_F(\rho)F_V(\rho)\sin\theta_R; \; S_2 = 2\alpha E_F(\rho)F_V(\rho)\cos\theta_R;$$
$$S_3 = \left(E_F(\rho)\right)^2 - \left(\alpha^2 F_V(\rho)\right)^2$$
$$\beta = \theta_R;$$

Nous utiliserons les termes d'un objet clairsemé « sparse object » en anglais, pour décrire un ensemble d'émetteurs lumineux ponctuels, d'un nombre inférieur à douze, positionné dans un volume dont la taille, dans chacune des dimensions, est inférieure à 3 longueur d'ondes, à la longueur d'onde d'émission ou de réflection des émetteurs. Le volume de taille inférieure à 3 longueurs d'ondes, qui contient l'objet clairsemé, sera référencé comme un volume d'analyse de taille réduite.

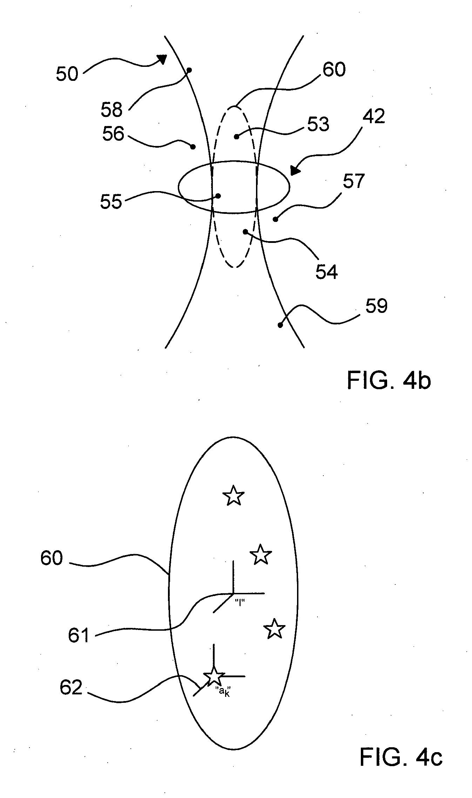

On se réfère maintenant aux figures 4a à 4c qui sont une représentation simplifiée du concept de confinement volumique du microscope confocal.

La fonctionnalité du confinement volumique est de limiter, dans les trois dimensions spatiales, la région observée de l'échantillon à un volume de taille la plus petite possible, le volume d'analyse. La fonctionnalité du confinement volumique limite le volume d'analyse par la combinaison de deux effets : le confinement de la lumière projetée sur une petite surface, idéalement de la taille de la tâche d'Airy, 50, et l'élimination de la lumière défocalisée par le trou confocal, 28 de la Figure 2. La superposition de ces deux effets crée un petit volume, le volume d'analyse, 60. Ce volume détermine la taille de la cellule élémentaire détectée par le système.

Considérons un objet clairsemé, 51, consistant en un ensemble de fluorophores, 53 à 59. Les fluorophores 53 à 55 positionnés dans le volume d'analyse 60, et seulement eux, sont à la fois excités par la source lumineuse et les photons émis par eux arrivent au module du détecteur. Les fluorophores ne se trouvant pas dans le cône d'éclairage, 56 et 57, ne sont pas illuminés par la lumière incidente. La lumière émise par les fluorophores 58 et 59 ne se trouvant au plan conjugué du trou confocal, 28 de la Figure 2, est bloquée, presque intégralement, par le trou confocal, 28 de la Figure 2.

Deux repères cartésiens différents sont définis dans le système, Figure 4c:

Le référentiel « i » : Les axes référencés « i » représentent un repère cartésien centré sur le centre du volume d'analyse, 61.

Le référentiel « a » : Les axes référencés « a » représentent un repère cartésien centré, pour chaque nanoémetteur lumineux, sur le nanoémetteur lumineux considéré comme un point discret, 62,

Lorsque, en utilisant la méthode PSIT décrite ultérieurement, on projette un vortex sur l'échantillon, le centre du vortex sera en général défini comme le centre du volume d'analyse.

Le microscope confocal permet de limiter le volume d'analyse en utilisant le confinement volumique décrit précédemment. Le confinement volumique est obtenu par la combinaison de deux effets : le confinement de la lumière projetée sur une petite surface, idéalement de la taille de la tâche d'Airy, 50, et l'élimination de la lumière défocalisée, par le trou confocal, 41. La superposition de ces deux effets crée un petit volume, le volume d'analyse, 60. Ce volume détermine la taille de la cellule élémentaire détectée par le système.

Au moins un mode de réalisation de l'invention utilise la diffraction conique pour réaliser les modules optiques fondamentaux de la technique. Toutefois, des implémentations alternatives, remplaçant les modules basés sur la diffraction conique, par des modules basés sur d'autres concepts optiques, sont en mesure de fournir les mêmes fonctionnalités. Elles font partie du champ de cette invention. Les concepts optiques alternatifs comprennent mais ne sont pas limités aux cristaux uniaxes, aux réseaux à pas inférieur à la longueur d'onde, « subwavelength gratings », aux modes de laser structurés, aux composants holographiques et à d'autres techniques connues de l'Homme de l'Art,

Ces concepts, techniques et dispositifs optiques et optoélectroniques, sont connus de l'Homme du métier et l'ensemble de ces moyens optiques sont décrits dans de nombreuses publications, comme par exemple le livre écrit par D. Goldstein, «Polarized light», [25], le « Handbook of Confocal Microscopy », [26], le « Handbook of Optics », [27], et de nombreuses autres publications connues de l'Homme de l'Art.

**Acronymes**

Nous utiliserons dans ce document l'acronyme, SRCD, « Super Resolution using Conical Diffraction » pour nommer la plateforme, les modules et systèmes spécifiques à l'implémentation préférée de cette invention.

Nous utiliserons dans ce document l'acronyme, PSIT, méthode de projection d'une séquence d'intensités lumineuses différant topologiquement, soit en anglais : « Projected Sequence of Intensities with various Topologies »

Nous utiliserons dans ce document l'acronyme, PDOS, sémaphore optique à dépendance spatiale, soit en anglais : «Position Dependent Optical Semaphore».

La plateforme SRCDP, « Super Resolution using Conical Diffraction Platform», est une plateforme de Microscopie implémentant la méthodologie de mesure en utilisant des modules optiques basés sur la diffraction conique. La plateforme SRCDP est l'implémentation préférée de la méthodologie de mesure

Nous utiliserons dans ce document l'acronyme, LatSRCS pour nommer le module optique implémentant la méthode PSIT à l'implémentation préférée de cette invention.

Nous utiliserons dans ce document l'acronyme, LongSRCS pour nommer le module optique implémentant méthode PDOS à l'implémentation préférée de cette invention.

Des modes de réalisation de la présente invention consistent en une nouvelle méthodologie de mesure, la méthodologie de mesure , et un ensemble cohérent de méthode systémiques et algorithmiques, d'outils matériels, d'outils algorithmiques et logiciels permettant son implémentation.

La méthodologie de mesure selon des modes de réalisation permet l'acquisition optique de données nanométriques et d'images de superrésolution. La méthodologie de mesure est principalement, mais non exclusivement, utilisée pour la mesure de données superrésolues d'échantillons biologiques marqués par des fluorophores.

La méthodologie de mesure peut être implémentée en utilisant différentes procédés de mesure et de traitement algorithmique, décrites ci-dessous. Entre autres, la méthodologie de mesure peut être implémentée en utilisant conjointement ou séparément deux nouvelles méthodes de mesure, complémentaires, référencées :

  ◦ PSIT, méthode de projection d'une séquence d'intensités lumineuses différant topologiquement, soit en anglais : « Projected Sequence of Intensities with various Topologies »
  et

  ◦ PDOS, sémaphore optique a dépendance spatiale, soit en anglais : «Position Dependent Optical Semaphore».

Certains modes de réalisation de l'invention concernent aussi un système - une plateforme de microscopie - implémentant la méthodologie de mesure en utilisant les méthodes de mesure PSIT et PDOS. Ce système, la plateforme SRCDP, « Conical Diffraction based Super Resolution Platform», est l'implémentation préférée de la méthodologie de mesure.

La plateforme SRCDP, consiste principalement en deux modules matériels, deux modules optiques nouveaux et complémentaires, les modules optiques LatSRCS et LongSRCS, montés sur un microscope, et un module algorithmique, SRCDA, permettant de reconstruire l'information superrésolue de l'échantillon. De plus la plateforme SRCDP, inclue un module de détection amélioré, un module de contrôle du système, et un support informatique et logiciel.

La méthodologie de mesure consiste en l'utilisation conjointe des deux méthodes de mesure, les méthodes PSIT et PDOS. Toutefois, dans certaines applications, l'utilisation des deux méthodes peut ne pas être nécessaire ; nous nous réfèrerons dans ce cas à la méthodologie de mesure simplifiée qui fait partie du champ d'application de cette invention.

Certains modes de réalisation de l'invention concernent aussi des méthodes d'utilisation de la méthodologie de mesure pour la mesure de distribution de fluorophores et de fluorophores, et du suivi en deux ou trois dimensions de fluorophores.

De plus, certains modes de réalisation de l'invention concernent un nombre important de variantes d'implémentations de la méthodologie et des méthodes PSIT et PDOS, de la plateforme SRCD, des modules optiques LatSRCS et LongSRCS et de l'algorithmique, SRCDA.

La fonctionnalité du microscope confocal, décrite par Minsky, [24], et explicité antérieurement, est de limiter, dans les trois dimensions spatiales, la région observée de l'échantillon à un volume de taille la plus petite possible, le volume d'analyse.

En corollaire, dans un microscope de fluorescence confocal, l'information acquise est une valeur unique d'intensité pour l'ensemble du volume d'analyse, conçu comme une entité unique. Plus clairement, l'information détaillée de la position des fluorophores à l'intérieur du volume d'analyse n'est pas accessible, à priori, dans un microscope confocal. Il était généralement admis qu'aucune information optique additionnelle ne pouvait être créée qui aurait permis une discrimination supplémentaire à l'intérieur du volume éclairé.

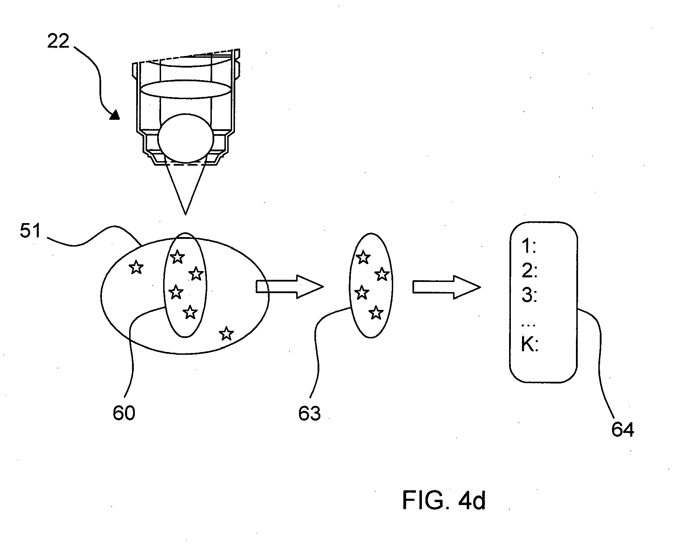

On se réfère maintenant à la Figure 4d, qui est une représentation conceptuelle simplifiée du paradigme de mesure de la méthodologie selon au moins un mode de réalisation de l'invention. Le paradigme de mesure de cette méthodologie est beaucoup plus ambitieux que celui du microscope confocal de fluorescence, représenté schématiquement dans la Figure 4a.

Dans la figure. 4d, un volume d'analyse, 60, est créé au plan focal de l'objectif du microscope, 22 ; il contient un objet clairsemé, 51, consistant en plusieurs fluorophores, 53 à 59; le résultat du système implémentant la méthodologie est un objet clairsemé reconstruit, 63, et une liste des fluorophores et une liste de leurs attributs, 64.

Un système implémentant la méthodologie selon au moins un mode de réalisation de l'invention est capable de récupérer de manière indépendante et avec précision les attributs de plusieurs fluorophores dans un volume lumineux de dimension similaire à celle de la microscopie confocale. Pour atteindre cet objectif, la méthodologie selon des modes de réalisation de l'invention est conçue pour créer optiquement pour chaque volume éclairé, une grande quantité d'informations, dans les deux domaines temporel et spatial.

Le processus le plus développé de la méthodologie de mesure selon un mode de réalisation de l'invention peut être segmenté en sept étapes, cinq étapes optiques, une étape de détection optoélectronique et une étape algorithmique.

Étapes optiques :

- projection d'une séquence de distributions lumineuses compactes de topologies différentes, sur le volume d'analyse
- émission de lumière fluorescente par les fluorophores
- Imagerie des fluorophores sur le plan focal
- Séparation, de la lumière réémise en plusieurs canaux indépendants détectés simultanément et/ou séquentiellement
- optionnel limitation dans le plan focal de la lumière analysée

Étape de détection

- Détection de l'intensité lumineuse par un ou plusieurs détecteurs photoélectriques ponctuels ou matriciels

Étape algorithmique :

- Reconstruction de la liste de fluorophores, constituant l'objet clairsemé, et de leurs attributs à partir de l'ensemble des images détectées,

Suivant un autre mode de réalisation de la présente invention, la méthodologie de mesure consiste en la réalisation des étapes optiques décrites antérieurement, en omettant soit la première étape optique soit la quatrième étape optique.

Le processus optique composé implémentant la méthodologie comprend la réalisation d'une série de processus optiques de mesure, contrôlés par le module de contrôle du système, en variant les séquences d'illumination et/ou les fonctionnalités des canaux et/ou la position de la séquence d'illumination en fonction de données mesurées ou d'information externes. Un exemple de processus optique composé implémentant la méthodologie selon un mode de réalisation de l'invention sera détaillée ci-dessous.

Le résultat intermédiaire, l'information brute, est obtenu à l'issue de l'étape de détection. L'information brute consiste en un ensemble d'images Aop(m,n), représentant pour la distribution lumineuse o, l'image issue du canal de détection p.

Comme dans un microscope confocal, le processus de mesure analyse un volume de petite taille dans un objet de taille beaucoup plus grande. Il nécessitera donc l'ajout de modules supplémentaires, similaires à ceux d'un microscope confocal incluant un processus de balayage, un module logiciel d'intégration, d'analyse et de visualisation des données ponctuelles en surfaces et/ou en objets tridimensionnel.

Une méthode de mesure PSIT selon un mode de réalisation de l'invention, projette une séquence de distributions lumineuses de topologies différentes, sur le volume d'analyse.

La méthode de mesure PSIT, réalise les fonctions suivantes :

◦ Projection d'une séquence, la séquence d'émission, de distributions lumineuses compactes de familles topologiques différentes sur un échantillon, ; et
◦ Pour chaque distribution lumineuse compacte :

•  émission de lumière par les fluorophores de l'échantillon,
•  création, à l'aide de l'optique du microscope, d'une image optique,
•  acquisition de l'image optique par un détecteur photoélectrique et création d'une image numérique.

Plus en détails, il est à noter que :

La séquence d'émission consiste en, au moins deux, distributions lumineuses ponctuelles, de familles topologiques différentes

La séquence d'émission est projetée sur un échantillon biologique marqué par des fluorophores, référencés comme nanoémetteur lumineux. L'émission lumineuse émergente de chaque nanoémetteur lumineux est dépendante, pour chaque nanoémetteur lumineux, de l'intensité, cas incohérent, ou du champ électromagnétique cas cohérent, incidents à la position spatiale, tridimensionnelle du nanoémetteur lumineux susdit propriété d'échantillonnage du nanoémetteur lumineux discutée préalablement.

Pour chaque distribution lumineuse de la séquence d'émission projetée sur l'échantillon, une image optique est créée. L'ensemble des images correspondantes à l'ensemble des distributions lumineuses de la séquence d'émission est référencée comme la séquence d'images.

La méthode PSIT selon ce mode de réalisation permet d'acquérir une information essentiellement latérale, c'est-à-dire la position latérale chacun des fluorophores.

Dans un mode de réalisation préféré, la méthode PSIT est implémentée par la projection de distributions lumineuses de topologies différentes créées par diffraction conique et modifiées par une variation des états de polarisation d'entrée et de sortie.

Une méthode PDOS selon un mode de réalisation de l'invention comprend la distribution par un « sémaphore optique», de la lumière réémise par les fluorophores entre au moins deux détecteurs.

Idéalement, la fonction du sémaphore optique est de séparer sur des détecteurs différents des régions différentes du volume d'analyse. Pratiquement, le sémaphore optique crée, pour chaque détecteur, une fonction de transfert de la lumière émise par un nanoémetteur lumineux, dépendant de la position dans l'espace du nanoémetteur lumineux et différente pour les différents détecteurs.

Dans un mode de réalisation préféré, la méthode PDOS est implémentée de façon à séparer sur des détecteurs différents la lumière collimatée, émergente de fluorophores positionnés au plan focal de l'objectif, de la lumière non-collimatée émergente de fluorophores se trouvant en deca ou au-delà du plan focal.

La méthode PDOS, dans l'implémentation préférée, permet d'acquérir une information essentiellement longitudinale, c'est-à-dire la position longitudinale de chacun des fluorophores.

Mathématiquement, le procédé selon des modes de réalisation de l'invention réalise une fonction de transfert transformant la distribution spatiale dans l'espace des fluorophores en l'information brute consistant en un ensemble d'images. L'algorithmique réalise l'opération inverse : elle reconstruit la distribution spatiale dans l'espace des fluorophores à partir de l'ensemble d'images composant l'information brute.

En termes mathématiques l'algorithmique résout un problème inverse ou d'estimation de paramètres. Les équations du modèle sont connues et le nombre de fluorophores dans un objet clairsemé est limité à priori. On peut donc utiliser l'ensemble des procédures mathématiques connues de l'Homme du métier, pour la résolution de problèmes inverses ou l'estimation de paramètres. Nous décrivons ultérieurement un exemple d'algorithmique adapté spécifiquement à la méthodologie de mesure selon un mode de réalisation de l'invention.

De plus, nous présentons, pour sa valeur emblématique, une solution nouvelle du problème de la discrimination de deux points positionnés à faible distance l'un de l'autre. Ce problème, étudié par Lord Rayleigh, est la base du critère de résolution dans de nombreux domaines de l'Optique.

Il a ainsi été décrit, de manière assez large, les caractéristiques de l'invention afin que la description détaillée de celle-ci puisse être mieux comprise, et afin que la présente contribution à l'art puisse être mieux appréciée. De nombreuses fonctionnalités supplémentaires de l'invention seront décrites ci-après.

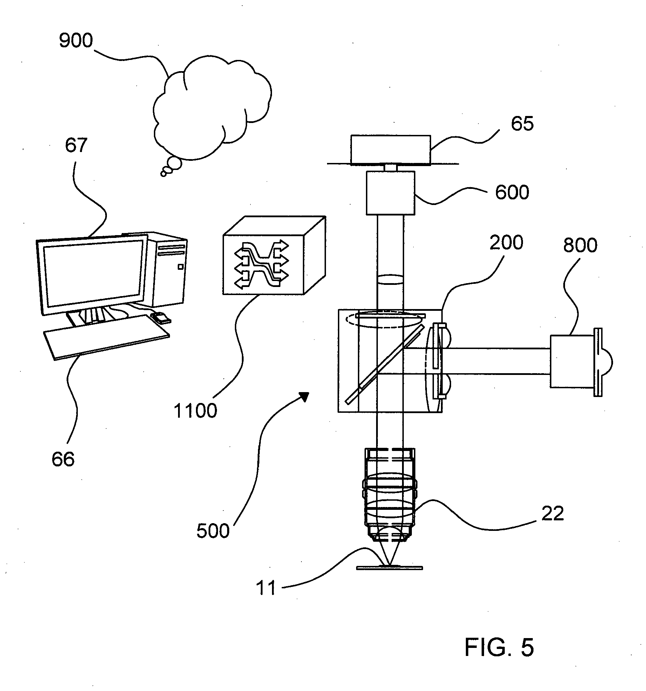

L'implémentation préférée de la méthode selon un mode de réalisation de l'invention est une plateforme matérielle et algorithmique, référencée comme la plateforme SRCDP, 500, illustré à la Figure 5.

La plateforme SRCDP, 500, implémente la méthode selon un mode de réalisation de l'invention , en combinant les deux méthodes PSIT et PDOS décrites ci-dessus.

La plateforme SRCDP observe, Figure 5, un échantillon biologique, 11, intégrant un ensemble de fluorophores. Le résultat de l'observation de l'échantillon biologique par la plateforme SRCDP est l'acquisition d'information de superrésolution, représentative de l'échantillon observé.

La plateforme SRCDP, 500, Figure 5, comprend principalement :

Dans sa partie matérielle :

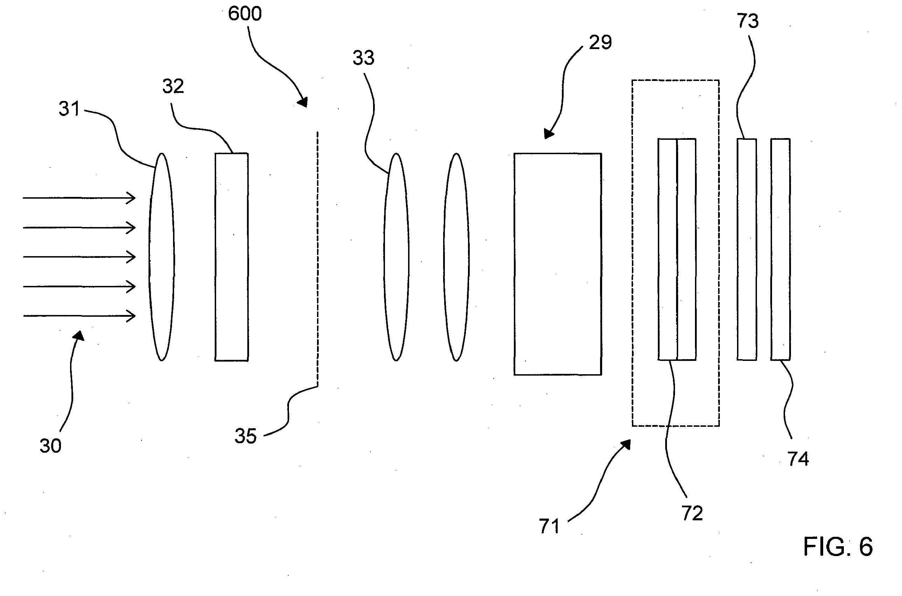

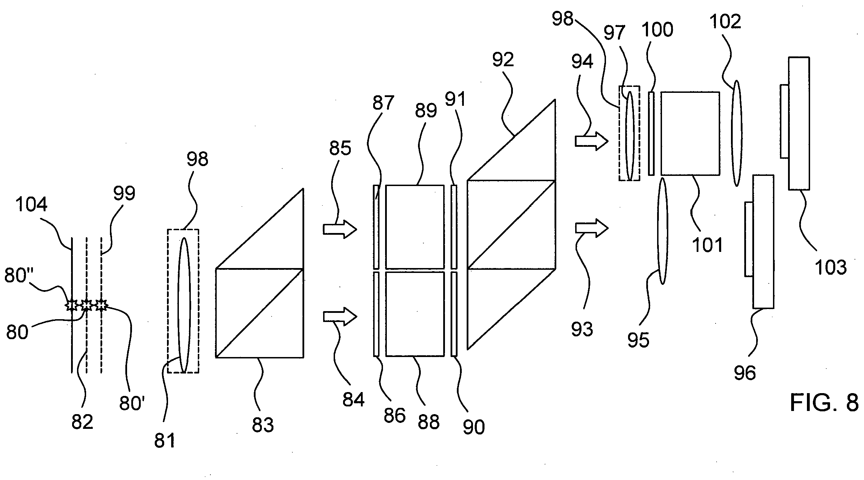

- Un microscope confocal 200,, adapté ou optimisé, similaire au microscope confocal, décrit antérieurement, et comprenant l'ensemble des composants adéquats, tel que décrit antérieurement
- Deux modules optiques nouveaux et complémentaires, montés sur un microscope standard. Les deux modules optiques nouveaux sont les modules optiques LatSRCS, 700, et LongSRCS, 800, décrit en détails ultérieurement en se référant aux Figures 6 et 8, respectivement. Le module optique LatSRCS 700, implémente les étapes d'illumination nécessaires à l'implémentation de la méthode PSIT selon un mode de réalisation de l'invention. Le module optique LongSRCS, 800, implémente les étapes de distribution de l'intensité lumineuse émergente en une pluralité de images de la méthode PDOS selon un mode de réalisation de l'invention et;
- le module algorithmique SRCDA, 600, qui sera décrit en se référant à la Figure 8, est capable, à partir des images créées par la plateforme SRCDP de reconstruire l'information de superrésolution de l'échantillon biologique.
- D'autres éléments auxiliaires, , tels que l'ordinateur 66 et le logiciel 67, nécessaires à la réalisation de la plateforme,

**Module optique LatSRCS implémentant la méthode PSIT**

Nous décrivons, en se référant à la figure 6, un module optique selon un mode de réalisation de l'invention, le module optique LatSRCS, 700, et sa fonction spécifique en microscopie.

Le module optique, LatSRCS, 700 selon ce mode de réalisation, est un module optique, projetant sur une pluralité de fluorophores d'un échantillon, une séquence de distributions lumineuses compactes de topologie différente. Chaque fluorophore fluoresce avec une séquence d'intensités fluorescentes lumineuses dépendant de l'intensité incidente sur le fluorophore et caractérisant la position latérale du fluorophore. Dans la plupart des modes de réalisation, les distributions lumineuses compactes de topologies différentes sont créées par l'interférence, avec des amplitudes et phases variables entre une onde ordinaire et une onde singulière. Dans le mode de réalisation préféré, les ondes régulière et singulière sont créées par un cristal conique mince.

Le module optique LatSRCS, 700, est positionné dans la voie d'éclairage du microscope confocal 200 ; il projette une séquence de distributions lumineuses compactes de topologies différentes sur l'échantillon 11 en utilisant l'objectif du microscope confocal 200. Dans le mode de réalisation préféré utilisant la diffraction conique, l'intensité incidente à une position spécifique sur l'échantillon 11 sera proportionnelle, pour chaque distribution lumineuse, à une combinaison spécifique des paramètres de Stokes.

Le module optique LatSRCS, 700, utilise une fonctionnalité inhérente, décrite précédemment, spécifique au fluorophore, qui échantillonne l'intensité lumineuse incidente à sa position précise (du fluorophore) et réémet une lumière fluorescente dépendante de la lumière incidente. Il est remarquable que l'information mesurée soit directement liée à la position du fluorophore à l'intérieur de la distribution lumineuse compacte, relayée par les paramètres de Stokes. Cette information est figée par la fonctionnalité du fluorophore, sa propriété d'absorber et de réémettre la lumière, qui rompent la chaîne optique. Cette information est portée par la lumière fluorescente, sous forme d'une distribution lumineuse émergente, récupérable par un ensemble de détection 65.

Si la lumière incidente varie dans le temps en fonction d'une séquence de distributions lumineuses compactes de topologies différentes, l'intensité de la lumière fluorescente réémise varie dans les mêmes proportions. La séquence de la lumière fluorescente réémise sera proportionnelle à la séquence des distributions lumineuses compactes de topologies différentes. A partir de cette information, il est possible de récupérer la position du fluorophore, comme expliqué ci-dessous.

La méthode PSIT selon des modes de réalisation de l'invention fait référence à la projection d'une séquence de distributions lumineuses compactes de topologies différentes dans un microscope, l'interaction avec les fluorophores, la collecte de la lumière réémise par l'objectif du microscope, 22, la détection de la lumière fluorescente par l'ensemble de détection amélioré 65, et l'analyse de l'information par un algorithme approprié. Dans certains modes de réalisation, l'ensemble de détection amélioré, 65, se compose d'un détecteur unique, et ne récupère que l'intensité globale en fonction du temps, tandis que dans d'autres modes de réalisation, l'ensemble de détection amélioré se compose d'une petite zone de pixels et récupère aussi la répartition spatiale de la lumière fluorescente. L'ensemble des informations récupérées, consistant en une pluralité d'images, désigné comme les images latérales de superrésolution.

Dans un mode de réalisation préféré, la contribution d'un fluorophore positionné dans le volume éclairé à une image latérale de superrésolution spécifique est proportionnelle à une combinaison des paramètres de Stokes de la lumière incidente à la position du fluorophore.

Les images latérales de superrésolution, l'information créée par les distributions lumineuses compactes de topologies différentes est nouvelle, et n'était pas présente dans l'art antérieur. Cette information nouvelle permet d'affiner la position des fluorophores, de quantifier le nombre de fluorophores présents dans le volume éclairé et de différencier plusieurs fluorophores présents dans le même volume.

On se réfère maintenant à la figure 6, qui est une illustration schématique simplifiée d'un module optique LatSRCS, 700, conformément à un mode de réalisation de la présente invention.

La figure 6 représente un module optique, LatSRCS, 700, il inclut tous les composants du module de diffraction conique, de la figure 3, qui sont mis en oeuvre de la même manière que dans le module de diffraction conique 300. L'optique de la source lumineuse du microscope confocal à balayage est supposée être en conjugaison infinie, même si d'autres conditions peuvent être adaptées en utilisant une optique auxiliaire. La lumière incidente, entrant depuis la source lumineuse est parallèle, 30. Le module optique 700 lui-même comprend une première lentille, 31, un cristal conique 32, et une seconde lentille 33; un polariseur partiel, 29, décrit ci-dessus, peut également être ajouté. Les deux premières lentilles, 31 et 33, sont configurées de préférence sous forme d'un télescope de Kepler de rapport 1:1; le plan d'imagerie conique, 35, est placé au plan focal commun des lentilles 31 et 33. L'ouverture numérique de la première lentille, 31, détermine les paramètres de l'effet de diffraction conique à travers le rayon normalisé conique, définies ci-dessous. Le second objectif, 33, restaure le parallélisme de la lumière, pour l'injecter au microscope. Il comprend en outre un sous-module de contrôle de polarisation, 71, comprenant, par exemple, une lame quart d'onde tournante, une paire de valves de lumière à cristaux liquides ou une cellule de Pockels, 72, et un analyseur 73. L'information des paramètres de Stokes peut être transformée en information séquentielle, à travers une séquence de distributions lumineuses spatialement différenciés, et portant des informations séquentielles, comme décrit ci-dessus.

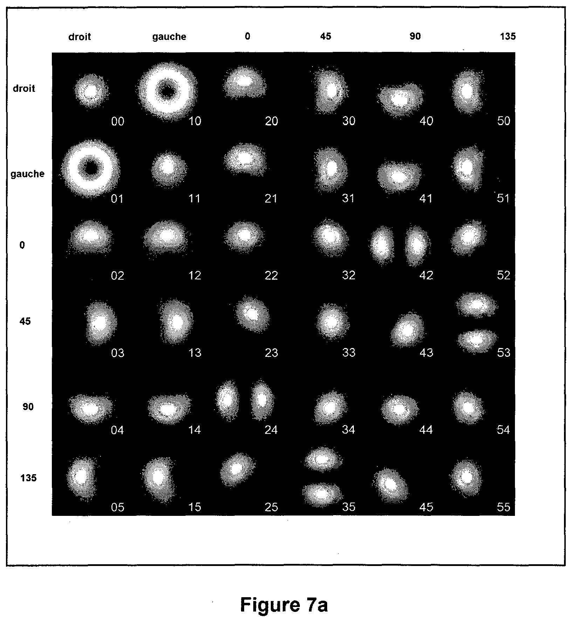

Se référant à la Figure 7a, cette figure représente les distributions lumineuses, créées à travers un cristal conique de paramètre conique normalisé $\rho_0$ de 0.388, calculées par une approximation scalaire, pour différents états de polarisation d'entrée et de sortie. Ces distributions lumineuses ont été calculées en utilisant le logiciel Diffract de la société MMresearch. Ces distributions lumineuses ont été calculées dans un plan intermédiaire d'imagerie et non au foyer de l'objectif pour séparer la réfraction conique des effets vectoriels. Les états de polarisation - d'entrée et de sortie - sont caractérisés par leur angle pour les polarisations linéaires et par leurs chiralités pour les polarisations circulaires.

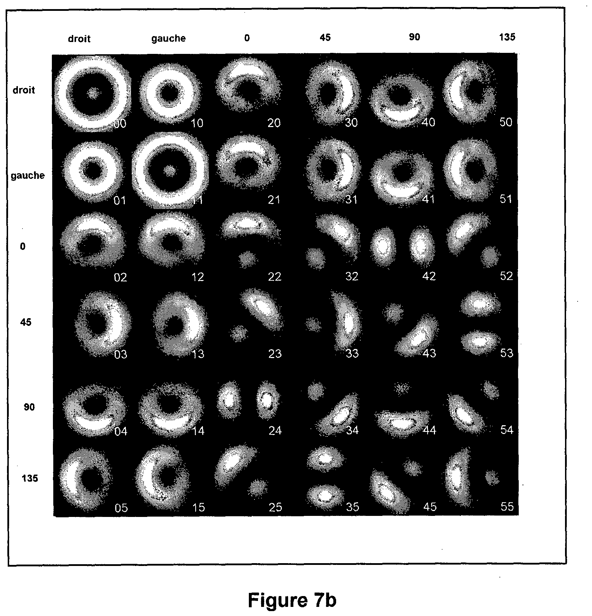

Se référant à la Figure 7b, cette figure représente les distributions lumineuses, créées à travers un cristal conique de paramètre conique normalisé $\rho_0$ de 0.818, calculées par une approximation scalaire, pour différents états de polarisation d'entrée et de sortie. Ces distributions lumineuses ont été calculées en utilisant le logiciel Diffract de la société MMresearch. Ces distributions lumineuses ont été calculées dans un plan intermédiaire d'imagerie et non au foyer de l'objectif pour séparer la réfraction conique des effets vectoriels. Les états de polarisation - d'entrée et de sortie sont caractérisés par leur angle pour les polarisations linéaires et par leurs chiralités pour les polarisations circulaires.

Nous noterons principalement les distributions lumineuses suivantes :

- Le fondamental : Figure $7a_{00}$ et $7a_{11}$, obtenue entre polariseurs circulaires parallèles, qui est une distribution proche de la distribution d'Airy
- Le vortex : Figure $7a_{01}$ et $7a_{10}$ obtenue entre polariseurs circulaires, croisés
- La distribution que nous avons appelé la distribution en « croissant de lune », les sous-figures $7a_{0,2\text{-}5}$, $7a_{1,2\text{-}5}$, $7a_{2\text{-}5,0}$ et $7a_{2\text{-}5,1}$, sont obtenue entre un polariseur circulaire et un polariseur linéaire d'angle variable; cette distribution est antisymétrique et l'axe tourne avec l'axe du polariseur linéaire,
- La distribution que nous avons appelé la distribution en « demi-lunes», sous-figures $7a_{42}$, $7a_{35}$, $7a_{24}$ et $7a_{53}$ sont obtenues entre deux polariseurs croisés ; cette distribution est symétrique.
- Les distributions lumineuses plus complexes, Figure 7b, pour un cristal de paramètre conique normalisé, $\rho_0$, supérieur à 0.5
- la réalisation de distributions lumineuses additionnelles à l'aide de deux - ou plus - cristaux coniques en cascade, (non représentées) avec ou sans éléments de polarisation statiques ou dynamiques entre les cristaux

## Redondance et variations de phase aléatoires

Les distributions lumineuses élémentaires décrites dans la Figure 7 peuvent être obtenues de plusieurs façons différentes. De plus, certaines d'entre elles peuvent être obtenues comme une combinaison linéaire d'autres distributions lumineuses élémentaires; par exemple le vortex peut être obtenu par la n'importe quelle somme de deux distributions lumineuses « demi-lunes » orthogonales.

Cette redondance permet de moyenner une partie des erreurs de phases aléatoires présentes inexorablement dans de nombreux processus de mesure d'objets biologiques. Ceci renforce la robustesse de la méthodologie de mesure des modes de réalisation de l'invention et son applicabilité.

Des distributions lumineuses nouvelles peuvent être aussi obtenues comme des combinaisons mathématiques de distributions lumineuses élémentaires. La distribution lumineuse « pseudo-vortex », calculée à partir de combinaisons arithmétiques des quatre distributions de Stokes a la particularité d'avoir un très fort gradient à l'origine.

La Méthode PSIT a été conçue au départ pour permettre une superrésolution latérale ; toutefois la méthode PSIT peut aussi être utilisée pour obtenir la position longitudinale d'un fluorophore. En effet, certaines distributions lumineuses élémentaires sont relativement insensibles - dans des limites raisonnables - à une variation de la position longitudinale du fluorophore, d'autres y sont au contraire très sensibles. Une séquence de distributions lumineuses compactes, certaines d'entre elles indépendantes et certaines d'entre elles dépendantes de la position longitudinale permettrait de remonter à la position longitudinale des fluorophores.

De plus, pour les distributions lumineuses dépendant fortement de la position longitudinale du fluorophore, une série de distributions lumineuses élémentaires décalées légèrement longitudinalement l'une par rapport à l'autre peut être projetée sur l'échantillon, permettant un ensemble d'images contenant une information longitudinale.

De plus, certaines distributions lumineuses élémentaires plus complexes, consistant en des superpositions plus complexes d'ondes existent avec une forte dépendance longitudinale ; par exemple les « spot tridimensionnel obscurs » décrits par Zhang, [28], créent un spot noir entouré en trois dimensions par une sphère lumineuse. Ces « spot tridimensionnels obscurs » consistent en une superposition de fonctions de Laguerre-Gauss, qui peuvent être réalisés à l'intérieur d'une cavité laser ou à l'aide d'un hologramme ou d'une plaque de phase, comme suggéré par Zhang ou à l'aide de cristaux coniques ou uniaxes comme le suggère l'inventeur.

Toute ces variantes de la méthodologie de mesure sont réputées faire partie de l'invention. L'inventeur a pourtant choisi, dans l'implémentation préférée de séparer en deux modules optiques disjoints mais complémentaires les mesures latérales des mesures longitudinales pour réduire la complexité de chacun des modules complémentaires.

**Effets vectoriels**

La théorie développée jusqu'à présent décrit la distribution de lumière dans le plan d'imagerie du microscope, 35. La répartition de la lumière projetée sur l'échantillon est, selon la théorie de l'imagerie géométrique, une image réduite de la distribution de la lumière dans le plan image.

Toutefois, comme il est décrit abondamment dans la littérature, pour un objectif à forte ouverture numérique, la théorie de l'imagerie géométrique n'est pas exacte et les effets vectoriels, doivent être pris en compte. Ces effets consistent essentiellement en la présence d'une composante polarisée longitudinalement.

En référence de nouveau à la Figure 6, pour atténuer les effets vectoriels, il peut être avantageux de maintenir l'analyseur final fixe et d'ajouter un élément supplémentaire, fixe ou variable, le sous-module d'adaptation de polarisation de sortie, 74, pour contrôler la polarisation de sortie. Nous avons constaté que la polarisation de sortie ayant une symétrie circulaire réduit sensiblement les effets vectoriels. Une telle polarisation peut être circulaire, radial ou azimutale. Pour la polarisation circulaire, le sous-module d'adaptation de polarisation de sortie 74, est tout simplement une lame de retard d'un quatre d'onde. Dans ce cas, les éléments de polarisation longitudinale ont une symétrie de vortex et se fondent harmonieusement dans le système avec seulement une petite modification de la forme des paramètres de Stokes, même pour les objectifs de microscope avec une ouverture numérique très élevé.

Alternativement, le sous-module d'adaptation de polarisation de sortie, 74, peut être variable et s'adapter à la topologie et à la symétrie de chacune des distributions lumineuses compactes.

**Module optique LongSRCS implémentant la méthode PDOS**

Nous décrivons un module optique LongSRCS, avec plus de détails ci-dessous. Le système de superrésolution longitudinale selon un mode de réalisation de l'invention canalise les intensités lumineuses incidentes d'une pluralité de sources ponctuelles, placées dans un petit volume lumineux, soit sur des détecteurs séparés soit sur des positions géométriques distinctes sur le même détecteur soit sur une combinaison des deux, en fonction de la position spatiale de chaque source ponctuelle.

En des mots plus simples, l'intensité émise par un fluorophore placé longitudinalement au point A sera physiquement séparée de l'intensité émise par un fluorophore placé longitudinalement au point B.

Le module optique LongSRCS selon le mode de réalisation de l'invention permet la séparation du volume en tranches, les différentes tranches du volume illuminé étant physiquement séparées sur les différents ensembles de détecteurs.

Dans la réalisation privilégiée, qui sera détaillée ci-dessous, le module optique LongSRCS sépare un volume éclairé en au moins trois tranches adjacentes, en séparant la tranche moyenne des deux autres tranches sur des ensembles de détecteurs améliorés indépendants, et en créant une différenciation spatiale entre les deux tranches subsistantes sur le même ensemble de détecteurs amélioré.

On se réfère maintenant à la figure 8, qui est une illustration schématique simplifiée d'un module optique LongSRCS 800, conformément à un mode de réalisation de la présente invention.

Le module optique LongSRCS canalise l'intensité lumineuse incidente d'une pluralité de sources ponctuelles, placé dans un petit volume lumineux, soit sur des détecteurs séparés soit sur des positions géométriques distinctes sur le même détecteur soit sur une combinaison des deux, en fonction de la position longitudinale de chaque source ponctuelle.

Dans un mode de réalisation préféré, il opère sur des fluorophores, représenté par 80, 80' ou 80 ", en fonction de leur position longitudinale. Il comprend une première lentille de collimation 81, qui peut consister, dans certains modes de réalisation de l'objectif du microscope, 4.

Le fluorophore 80 est positionné dans le plan focal de la lentille de collimation, 82; la lumière provenant de fluorophore 80, émergeant de la lentille de collimation, 81, est collimatée.

Les fluorophores 80' et 80 " sont placés avant et après le plan focal de la lentille de collimation, 82, à une distance de $\pm \Delta z$, la lumière provenant de fluorophores 80' ou 80", émergeant de la lentille de collimation 81, est convergente ou divergente.

Le module optique LongSRCS comprend un séparateur de faisceau de polarisation, représenté sur la figure. 8, sous la forme d'un séparateur de faisceau de polarisation à déplacement latéral, 83. Le séparateur de faisceau de polarisation divise la lumière incidente, supposé être non polarisée, en deux canaux de polarisation, 84 et 85, ayant des polarisations linéaires orthogonales. Le système peut être simplifié en utilisant un canal de polarisation unique au lieu de deux, si la lumière entrante est déjà polarisée ou au coût d'une perte de la moitié de l'intensité de la lumière incidente, pour de la lumière non polarisée.

Deux lames de retard d'un quart d'onde, 86 et 87, transforment, pour chaque canal, la polarisation linéaire en polarisations circulaires.

Un cristal conique est placé dans chacun des canaux, 88 et 89. Dans chaque canal, un setup de diffraction conique, comme décrit dans la figure. 3, est constitué par la lentille de collimation, 81, agissant en tant que premier objectif du setup de diffraction conique, 31, et un des cristaux coniques, 88 et 89. La configuration de diffraction conique sera complétée par une seconde lentille, 33, dans la suite.

Pour le fluorophore, 80, positionné dans le plan focal de la lentille de collimation, 82, la lumière sortant de la lentille de collimation 81, est, comme discuté ci-dessus, collimatée; se référant au setup de diffraction conique, l'ouverture numérique de la lentille de collimation, 81, dans l'espace image, et le rayon normalisé conique sont nuls, de sorte que l'effet de diffraction conique sur le faisceau issu de fluorophore 80 est nul. Par conséquent, le cristal conique ne modifie pas la géométrie de la lumière fluorescente émise par le fluorophore, ni sa polarisation, qui reste circulaire avec la même chiralité.

Pour les fluorophores, 80' ou 80 ", qui ne sont pas positionnés dans le plan focal de la lentille de collimation, 82, la lumière converge ou diverge; se référant à nouveau au setup de diffraction conique décrit ci-dessus, l'ouverture numérique dans le plan image de la lentille de collimation, 81, qui équivaut à la première lentille du setup de diffraction conique, 31, est non-nulle. Pour une valeur donnée $\Delta z$ de défocalisation, positive ou négative, la majeure partie de la lumière émergeant du cristal conique est contenue dans l'onde vortex, qui a une forme de vortex, et est de chiralité inversée.

La fonctionnalité des setups de diffraction conique positionnés dans chacun des canaux est donc de distinguer la lumière collimatée, de la lumière convergente ou divergente en inversant la chiralité de la polarisation circulaire de la lumière, pour la lumière convergente ou divergente.

Deux autres lames de retard d'un quart d'onde, 90 et 91 transforment les polarisations circulaires, émergeantes de chaque canal, en polarisations linéaires. Nous nous référons, pour chaque canal, à la polarisation linéaire, qui aurait émergé de la lame de retard si le cristal eut été retiré comme la polarisation de collimation

Le module optique LongSRCS comprend un combineur/séparateur à quatre ports, représenté sur la figure 8 comme un combineur/séparateur à quatre ports a séparation latérale, 92. Il sépare pour chaque canal les deux polarisations, et fusionne les deux polarisations de collimation dans le même chemin, le chemin de collimation, 93, et la polarisation orthogonale à la lumière de collimation dans un autre chemin, le chemin de non-collimation, 94. Les directions des axes des lames de retard 86, 87, 90 et 91 doivent être choisies de manière adéquate. Les faisceaux combinés n'interfèrent pas, parce qu'ils sont issus d'un faisceau originellement non polarisé.

La lumière incidente dans le chemin de collimation est focalisée sur le détecteur de collimation, 96, en utilisant la lentille de focalisation du chemin de collimation, 95, qui se comporte fonctionnellement comme la seconde lentille 32, du setup de diffraction conique.

Dans le chemin de non-collimation, une lentille supplémentaire, 97 est insérée; la lentille supplémentaire, 97, associée à la lentille de collimation, 81, crée un système de lentilles nouveau, 98, dont le plan focal, 99 est positionné à une position différente, du plan focal de la lentille de collimation, 82, à la position du fluorophore 80'. Une lames de retard d'un quart d'onde supplémentaire, 100, annule l'action des lames de retard 90 ou 91, transformant en retour les faisceaux entrants de chacun des canaux de polarisation, en la polarisation circulaire, suivant laquelle ils étaient polarisés à la sortie des cristaux coniques, 88 ou 89.

Un cristal conique supplémentaire, 101, est ajouté dans la voie de non- collimation constituant un troisième setup de diffraction conique - la configuration de diffraction conique auxiliaire - avec le système de lentilles, 98, agissant en tant que première lentille du setup de diffraction conique, 31.

Le fluorophore 80' était placé avant le plan focal de la lentille de collimation, 82, à une distance de $\Delta z$; mais, par rapport au système de lentille 98, il est positionné au plan focal, 99. La lumière provenant de fluorophore 80', avait déjà été transformée en un vortex par l'un des setups de diffraction conique constitué par la lentille de collimation 81, et l'un des cristaux coniques 88 ou 89, selon le canal de polarisation que la lumière avait parcourue. La lumière provenant de fluorophore 80 ' est collimatée à la sortie du système de lentilles, 98, après la lentille additionnelle, 97.

Se référant au nouveau setup de diffraction conique, l'ouverture numérique du système de lentilles dans l'espace image, et le rayon normalisé conique sont nuls pour fluorophore 80'; l'effet de diffraction conique, du setup de diffraction auxiliaire, sur le faisceau issu de fluorophore 80' est nul. Par conséquent, le cristal conique ne modifie pas la géométrie de la lumière fluorescente émise par le fluorophore. La lumière provenant d'un fluorophore, 80' est un vortex avant et après le cristal conique, 98.

Le fluorophore 80 " avait été placé après le plan focal de la lentille de collimation, 82, à une distance de $\Delta z$; relative au système de lentille 98, il est placé à une distance de -2 $\Delta z$ de la position focale, 99 et la lumière provenant de fluorophore 80 " convergent également à la sortie du système de lentilles, 98, après la lentille additionnelle, 97. La lumière provenant de fluorophore 80 ", a déjà été transformé en un vortex par l'un des setup de diffraction conique constitué par la lentille de collimation 81, et soit l'un des cristaux coniques 88 ou 89 , selon le canal de polarisation que la lumière a suivi. Le cristal conique 101 modifie la lumière provenant de fluorophore 80 " et, pour des paramètres adéquats du matériau, de la taille et de l'orientation du cristal conique, il le transforme à nouveau en une onde régulière, légèrement différente du disque d'Airy.

La lentille de focalisation de la voie de non-collimation, 102, est adaptée pour focaliser le plan contenant fluorophore 80 ", qui est une onde régulière, 104, et non le fluorophore 80 ', qui est singulier, sur l'ensemble de détecteur pixélisé, 103. La lumière incidente émergeante d'un fluorophore positionné au plan 104, comme par exemple le fluorophore 80 ", est parfaitement focalisée et est positionné au centre du détecteur pixélisé, 103. La lumière incidente émergeante d'un fluorophore positionné au niveau du plan 99 est un vortex et se concentre donc sur un anneau extérieur, avec un zéro central. En enregistrant séparément l'intensité au centre et de l'intensité à la partie externe du détecteur, il est possible de séparer, avec un léger chevauchement, entre la lumière incidente des plans 104 et 99. De plus, un fluorophore positionné au niveau du plan 104, comme le fluorophore 80 ' est légèrement délocalisé, car l'objectif est calculé de façon à focaliser le plan 104 sur le détecteur. Cela améliore l'action du module optique LongSRCS, en poussant encore plus l'intensité du vortex du centre et en réduisant le chevauchement.

Cette description schématique d'un mode de réalisation préféré du module optique LongSRCS, 800, permet de nombreuses possibilités de variantes et adaptations par des modifications de ce schéma optique, grâce aux modifications connues de l'homme de l'art. Ces modifications comprennent, sans s'y limiter: le matériau des cristaux et leur orientations, le choix des éléments de polarisation, le choix des axes de polarisation, la cascade d'éléments, le nombre de détecteurs, ou l'inversion des rôles des fluorophores 80' et 80 " En outre,. le module est idéalement conditionné pour être construit comme un ensemble de sous-ensembles monolithiques ou même comme un seul ensemble monolithique.

**Méthode PDOS et mesures latérales**

La Méthode PDOS a été conçue au départ pour permettre une superrésolution longitudinale ; toutefois la méthode PDOS peut aussi être utilisée pour obtenir la position latérale d'un fluorophore. En effet, les distributions lumineuses élémentaires sont sensibles aussi à une variation de la position latérale du fluorophore. Pour un échantillon plan, dans le cas où la projection de lumière n'est pas réalisable, la méthode PDOS peut remplacer la méthode PSIT pour réaliser des mesures superrésolues.

Toute ces variantes de la méthodologie de mesure sont réputées faire partie de l'invention. L'inventeur a pourtant choisi, dans l'implémentation préférée de séparer en deux modules optiques disjoints mais complémentaires les mesures latérales des mesures longitudinales pour réduire la complexité de chacun des modules complémentaires.

**Module de détection**

Le corollaire de la puissance de la méthodologie de mesure est l'exigence d'un module de détection plus complexe, capable de détecter et récupérer les informations créées. En microscopie confocale à balayage le détecteur est un détecteur constitué d'un seul élément comme un PMT ou un SPAD. Le temps d'acquisition du détecteur est déterminé par le mécanisme de balayage.

La méthodologie de mesure nécessite, dans certains modes de réalisation, deux modules de détection, au lieu d'un, les modules de détecteur, fondamental et vortex. En outre, la méthodologie de mesure nécessite, dans certains modes de réalisation, pour chaque volume éclairé, l'acquisition de l'information optique sur une petite grille spatiale, typiquement 16 * 16, à un taux plus élevé que le temps du pixel, en raison de l'exigence de reconnaître et de quantifier les signaux séquentiels.

Un module de détection amélioré, 65, peut être mis en oeuvre en utilisant des détecteurs de petite taille faible nombre de pixels. Un tel module n'aura pas été réalisable il y a dix ou vingt ans, en raison de l'absence de technologies adéquates. Aujourd'hui, les détecteurs de petite taille faible nombre de pixels, à cadence élevée, avec des caractéristiques de faible bruit sont disponibles sur la base de plusieurs technologies des matrices de SPAD avec un faible nombre de pixels, comme 32 * 32 ont été démontré récemment avec des taux d'acquisition jusqu'à 1 MHz. Le module détecteur amélioré, 65, peut également être mis en oeuvre à l'aide de CCD, EMCCD ou capteurs CMOS. Des capteurs CCD, CMOS ou EMCCD avec un faible nombre de pixels existent ou peuvent être conçus spécifiquement. En outre, les détecteurs CCD, CMOS EMCCD peuvent être utilisés en utilisant des fonctionnalités de région d'intérêt, de sous-fenêtrage ou de «binning», disponibles dans de nombreux détecteurs.

Les informations spatio-temporelles référencées ici, sont la position et le temps de l'impact de chaque photon fluorescent. Dans les systèmes réels, l'information spatio-temporelle est corrompue par le bruit du détecteur, ce qui crée des photons erronés, et par l'inefficacité de détection, ce qui crée des photons qui ne sont pas détectés, réduisant les performances. Dans les matrices de SPAD, pour chaque photon, le pixel qui l'a détecté et le temps d'impact sont reçus, à savoir l'information spatio-temporelle complète est disponible. Pour des détecteurs CCD, CMOS ou EMCCD, l'acquisition de plusieurs trames est nécessaire pour approximer l'information spatio-temporelle.

Dans plusieurs implémentations nous ferons référence à des détecteurs séparés; dans de très nombreux cas les détecteurs pourront être soit physiquement séparés soit consistant en des zones différentes sur un même détecteur, soit une combinaison des deux cas précédents.

## Algorithmique SRCDA

Comme exposé antérieurement, l'algorithmique SRCDA peut être implémentée en utilisant les méthodes problème inverse ou d'estimation de paramètres connues de l'Homme du Métier.

Nous présentons aussi une algorithmique selon un mode de réalisation, spécifique à la méthodologie de mesure , basée sur un ensemble de descripteurs.

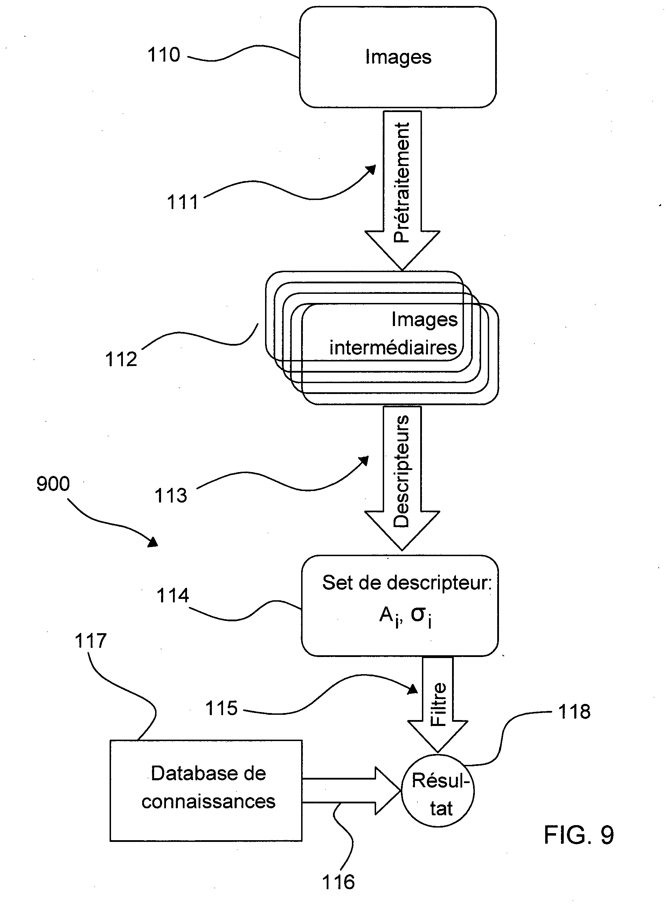

On se réfère maintenant à la figure 9, qui est une illustration schématique simplifiée 900 d'une méthode d'algorithme de superrésolution de données de fluorophore, conformément à un mode de réalisation de la présente invention.

Une procédure d'algorithme, présenté dans la figure. 9, quantifie le nombre de fluorophores, récupère les attributs de chaque fluorophore et quantifie la précision de chaque paramètre de sortie.

La procédure de prétraitement, 111, réorganise l'information spatio-temporelle, 110, dans des ensembles d'images de superrésolution, 112. Cette opération peut être effectuée en utilisant une procédure banque de filtres. L'ensemble de données intermédiaire est alors une petite série de petites images, typiquement de 16 * 16 pixels. La procédure de prétraitement, s'applique sur un petit nombre d'éléments spatio-temporelles de l'ordre de quelques milliers, il peut être effectuée en temps réel et utilisant du matériel informatique existant.

La procédure de descripteur, 113, l'étape principale du calcul, crée à partir de chaque image, un ensemble de descripteurs, 114, et leur pertinence statistique. Les descripteurs comprennent, mais ne sont pas limités à : l'intensité de chaque image, la présence, à l'image d'une répartition de la lumière et sa caractérisation comme une distribution régulière ou un vortex, son centre de gravité et ses moments d'ordre un et plus.

La troisième étape est une opération de filtrage, 115, dans lequel seuls les descripteurs, qui sont statistiquement pertinents, sont conservés.

L'opération de classification, 116, est la dernière étape de l'algorithme. L'algorithme est capable de reconnaître, sur la base de l'ensemble des descripteurs, 114, et une base de connaissances, 117, les différents cas de mesure comme un fluorophore unique, deux fluorophores séparés longitudinalement ou latéralement et trois ou plusieurs fluorophores.

Il convient de noter que, en raison de la quantité d'informations créées, de nombreux cas qui ont été ambiguë en microscopie à fluorescence seront clairement déterminés. Par exemple, comme décrit plus en détails ultérieurement, un fluorophore unique doit remplir à une longue liste de conditions et ne peut être confondu avec un cas multi-fluorophore. Deux fluorophores séparés longitudinalement vont créer des ensembles indépendants de descripteurs et deux fluorophores séparés latéralement diffèrent de façon claire sur au moins un descripteur d'un fluorophore unique.

*Algorithme du processus optique composé implémentant la méthodologie de mesure*

Le processus optique composé selon au moins un mode de réalisation de l'invention est un complément logique de l'algorithme des descripteurs. En effet, le résultat de la procédure de calcul des descripteurs peut mener à la conclusion qu'une image supplémentaire permettrait d'améliorer les performances de la mesure. La plateforme de microscopie SRCDP permet l'acquisition d'une - ou plusieurs images complémentaires choisie dans un ensemble de distributions lumineuses des méthodes PSIT ou PDOS.

Un exemple est explicité ultérieurement.

*Mesure de position d'un point par la méthode PSIT*

La méthode PSIT peut être utilisée comme une technique permettant de mesurer la position d'un fluorophore avec une haute précision. Cette mesure peut utiliser l'algorithme des descripteurs présenté antérieurement.

Considérons un fluorophore positionné à la position x,y en coordonnées cartésiennes et $\rho$, $\theta$ en coordonnés polaires. Une séquence d'illumination consistant en une onde fondamentale, et un couple de distributions dites « demi-lunes », alignées suivant des axes orthogonaux est projetée sur le fluorophore.

La procédure de prétraitement créée deux images :

Une image « top hat » consistant en la somme des trois images de la séquence,

Une image vortex consistant en la somme des deux images demi-lunes.

Un premier descripteur est la position cartésienne calculée à l'aide de l'algorithme du centroide sur l'image « top-hat ».

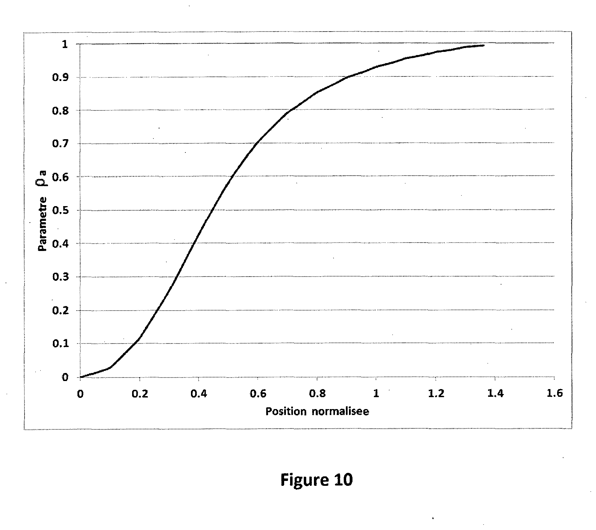

En se référant à la Figure 10, la position radiale $\rho$ peut être mesurée univoquement en mesurant un paramètre, $\rho_a$, égal à l'arc tangente normalisé d'un facteur $\pi$, du rapport d'intensité entre l'intensité normalisée émise par le fluorophore illuminé par l'onde vortex, $I_V$, et l'intensité normalisée émise par le fluorophore illuminé par l'onde fondamentale, $I_F$. En effet :

- l'intensité normalisée émise par le fluorophore illuminé par l'onde fondamentale varie de 1 au centre pour l'onde fondamentale à 0 au rayon d'Airy,
- l'intensité normalisée émise par le fluorophore illuminé par l'onde vortex varie de 0 au centre pour à 1 au maximum du vortex pour arriver à 0 pour une valeur légèrement supérieure au rayon d'Airy. L'arc tangente du rapport est une fonction monotone.

La position azimutale peut être mesurée en mesurant le rapport d'intensité entre l'intensité totale émise par le fluorophore illuminé par la première distribution demi-lune, $I_H$, et l'intensité totale émise par le fluorophore illuminé par la seconde distribution demi-lune, $I_{ve}$. Le rapport entre ces deux intensités est une loi géométrique en tangente carrée :

$$\frac{I_{VE}}{I_H} = \tan^2 \theta \qquad \text{(EQ. 9)}$$

Les deux mesures sont redondantes. Cette redondance est une mesure permettant de qualifier l'objet observé comme étant un point unique et de séparer ce cas des autres objets potentiellement présents sur l'échantillon.

*Représentation dans un espace de dimension supérieur : représentation CartesianoPolaire*

Ce résultat peut être généralisé. Nous introduisons dans ce document une ensemble de nouvelles représentations du plan, couplant la représentation cartésienne et la représentation polaire. Nous avons nommé cette représentation la représentation CartesianoPolaire. Un point dans le plan sera représenté par un quadruplet, x, y, $\rho$, $\theta$. Cette représentation est non-euclidienne et redondante. Une représentation similaire de l'espace peut être définie mutatis mutandis.

A première vue cette représentation semble inutile ; c'est une représentation très complexe d'une réalité beaucoup plus simple. Il est fort connu que la position d'un point dans un plan peut être représentée alternativement, soit en utilisant les coordonnées cartésiennes, x et y, soit en utilisant les coordonnées polaires, $\rho$ et $\theta$.

*Représentation dans un espace de dimension supérieur : Espace de Pythagore*

Nous ne détaillerons dans ce document que la version simplifiée de la Représentation CartesianoPolaire, dans laquelle nous représentons un point par les coordonnées x, y et $\rho$. Nous avons nommé cet espace l'Espace de Pythagore.

Définissons la surface géométrique comme étant une surface bidimensionnelle dans l'espace tridimensionnel, qui remplit l'équation géométrique constitutive $\rho^2 = x^2 + y^2$ ; assumons un système de mesure mesurant simultanément x, y et $\rho$, tel qu'un système de mesure décrit dans le paragraphe précédent conjointement avec un algorithme de centroide sur les mêmes données. Un point physique sera donc positionné, dans l'espace de Pythagore, sur la surface géométrique. Considérons le cas de deux ou plusieurs points physiques : Le centre de gravité de la mesure des deux points est en dehors de la surface géométrique et crée un point en dehors de cette surface. Cette représentation mathématique est une formalisation et une généralisation de l'algorithme déterministe permettant la séparation du cas d'un point isolé de celui d'un agrégat de points décrit antérieurement.

*Reconnaissance et mesure de deux points : un nouveau critère de résolution*

Considérons maintenant deux fluorophores positionnés symétriquement autour du centre aux positions $\rho$, $\theta$ et $\rho$, $-\theta$ en coordonnés polaires. Nous utiliserons le système décrit dans les paragraphes précédents. Les trois descripteurs donneront les résultats suivants :

- Le centroide mesurera le centre de gravité de la distribution lumineuse, qui sera à l'origine,
- Le descripteur $\rho$, mesurera la valeur radiale commune des deux fluorophores,
- le descripteur $\theta$, qui dans le cas des demi-lunes contient une dégénérescence entre $\theta$ et $-\theta$, mesurera la valeur $\theta$.

Comme cité précédemment si la valeur du descripteur $\rho$ n'est pas nulle nous savons que le cas étudié n'est pas un point mais deux ou plus. De plus, les descripteurs $\rho$ et $\theta$ nous permettent de mesurer les caractéristiques de deux points à une résolution très supérieure à celle définie par le critère de Rayleigh. Qui plus est, en utilisant un processus composé, il est possible de séparer ce cas de la grande majorité des cas de 3 points et plus. Une distribution lumineuse supplémentaire peut être projetée sur l'échantillon, une demi-lune inclinée d'un angle $\theta$ ; l'hypothèse de la présence de deux points sera confortée ou infirmée en fonction des résultats de cette image. En effet, l'énergie mesurée ne sera nulle que pour deux points, pour une ligne ou pour une série de points alignés dans la direction de l'angle $\theta$.

**Module de contrôle**

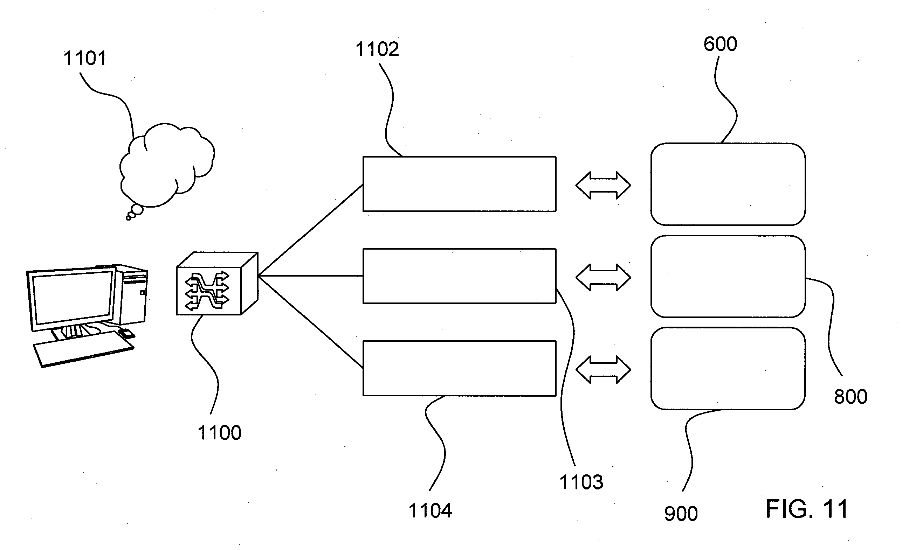

En référence à la Figure 11, dans le mode préféré de cette invention, l'invention décrit de plus, les différents éléments de contrôle intégrés dans la plateforme SRCDP, 500 :
Le Module de contrôle, 1100, à l'aide de la procédure systémique de contrôle, 1101, contrôle et modifie les paramètres optiques de la plateforme SRCDP, 500, les paramètres électroniques de l'ensemble de de détection amélioré, 65, et les paramètres mathématiques des procédures algorithmiques SRCDA, 600, pour optimiser l'information émergente, suivant des critères définis par le système ou par l'utilisateur. Le contrôle est réalisé en faisant varier les systèmes de contrôle 1102, 1103 et 1104, des différents éléments de la plateforme, 600, 800 et 900. Le système de contrôle, 1100, utilisera aussi, si elles sont disponibles des informations externes, 1105, relayées par le support informatique.

**IMPLEMENTATIONS ALTERNATIVES DE LA METHODOLOGIE DE MESURE**

Dans un mode de réalisation de la méthode PSIT, les ondes régulière et singulière sont créées par la propagation d'une onde incidente régulière à travers un cristal uniaxe, en remplacement du cristal conique, 32.
Dans un autre mode de réalisation de la méthode PSIT, les ondes régulière singulière sont créées par le positionnement au niveau du plan de Fourier d'un système optique d'une lame de phase -telle qu'une lame de phase spirale - ou un réseau de pas inférieur à la longueur d'onde, ou par le positionnement à un plan adéquat d'un hologramme.
Dans un autre mode de réalisation de la méthode PSIT - point épais- non représentée, l'illumination de l'échantillon se compose d'une séquence d'au moins deux distributions lumineuses compactes composées, chaque distribution lumineuse compactes composées étant elle-même constituée d'au moins deux distributions lumineuses compactes simples, projetées simultanément. Lesdits au moins deux distributions lumineuses compactes simples étant cohérents optiquement, cohérents partiellement ou incohérents l'un par rapport à l'autre, lesdits au moins deux distributions lumineuses compactes simples devant être positionnée à des positions spatiales différentes et lesdits au moins deux distributions lumineuses compactes simples différant dans au moins un des caractéristiques, telle que leur position centrale latérale, leur position centrale longitudinale, leur polarisation, leur amplitude ou leur phase. L'ensemble de distributions lumineuses compactes simples contenant des distributions lumineuses compactes de familles topologiques différentes.
Dans un autre mode de réalisation de la méthode PSIT, le rapport entre les ondes régulières et singulières est modifié dynamiquement, non représenté.
Dans un autre mode de réalisation de la méthode PSIT, non représenté, l'onde régulières et l'onde singulière sont créées par une séparation physique du faisceau incident - au moins - deux voies, la modification du faisceau dans l'une des voies, de régulière à singulière, étant réalisée par des moyens connus comme des lames de phase ou en spirale, élément optique holographique, réseau de pas inférieur à la longueur d'onde, cristaux biaxes ou uniaxes ou combinaison des deux, et la recombinaison des deux faisceaux en utilisant un combineur de faisceaux, en un seul faisceau. Dans ce mode de réalisation, la différenciation des distributions lumineuses compactes peut être effectuée soit sur le faisceau combiné ou sur chacun des faisceaux, de manière indépendante, après la séparation et avant la recombinaison.

Dans un autre mode de réalisation de la méthode PSIT, suivi dynamique, non représenté, le système comporte des moyens, y compris mais non limité à miroirs contrôlables, dispositifs électro-optiques ou acousto-optiques, ou des actionneurs piézo-électriques, capable de déplacer la distribution lumineuse compacte ou la séquence de distributions lumineuses compactes dans l'espace avec une grande précision. Dans le système de suivi dynamique de la position de la distribution lumineuse compacte et leur séquence est contrôlée dynamiquement de façon à suivre au moins une cible spécifique.

Dans un autre mode de réalisation de la méthode PSIT, fluorophore noir, non représenté, la distribution lumineuse compacte ou la combinaison mathématique de distributions lumineuses compactes est configuré de telle sorte qu'un zéro d'intensité existe au centre de la distribution lumineuse compacte. Le système comprend des moyens aptes à déplacer dans l'espace la distribution lumineuse compacte et ces moyens sont utilisés pour suivre le fluorophore, pour positionner le fluorophore en son centre, en fonction du temps. Lorsque le fluorophore est positionné au centre de la distribution lumineuse compacte, sans mouvement, sa position peut être évaluée avec une grande précision sans lumière fluorescente qui émerge d'un fluorophore réduisant ainsi sensiblement les effets de photo-blanchiment. Un mouvement du fluorophore peut être compensé par un mouvement adéquat de la position de la distribution lumineuse compacte, permettant de suivre le fluorophore en utilisant une petite quantité de lumière fluorescente émise.

Dans un autre mode de réalisation de la méthode PSIT, choix des séquences dynamiques, non représenté, le système détermine de façon dynamique, sur la base d'une hypothèse de positionnement ou sur un premier ensemble de mesures, la séquence optimale des distributions lumineuses compactes.

Dans un autre mode de réalisation de la méthode PSIT, choix des séquences et positionnement dynamiques de la distribution lumineuse compacte, non représenté, le système comporte des moyens, y compris mais non limité à des miroirs contrôlables, dispositifs électro-optiques et acousto-optiques ou des actionneurs piézo-électriques, capable de déplacer dans l'espace le distribution lumineuse compacte ou la combinaison de distributions lumineuses compactes avec une grande précision. Le système détermine de façon dynamique, sur la base d'une hypothèse de positionnement ou sur un premier ensemble de mesures, la séquence optimale et la position des distributions lumineuses compactes.

Dans un autre mode de réalisation de la méthode PSIT, la méthode PSIT de triangulation, deux, ou plus, processus de mesure de la méthode PSIT, décrit antérieurement, sont réalisés sur le même échantillon avec des axes de projection différents. La variation de position latérale entre les deux mesures permet la mesure de la position longitudinale des nanoémetteur lumineux.

Dans un autre mode de réalisation de la méthode PSIT, la méthode PSIT parallèle, la lumière est incidente sur un ensemble de microlentilles - ou un autre moyen optique, connu de l'Homme de l'Art, permettant la réalisation d'un ensemble de distributions lumineuses en parallèle; ces distributions lumineuses sont modifiées par un module optique pour réaliser, simultanément, sur un grand nombre de points discrets, la méthode PSIT.

Dans un autre mode de réalisation de la méthode PSIT, la méthode PSIT multispectrale (non représentée), l'échantillon est illuminé, séquentiellement ou simultanément, par au moins deux séquences d'illumination, chaque séquence projetant de la lumière sur l'échantillon à des longueurs d'ondes différentes

Dans un autre mode de réalisation de la méthode PDOS, non représenté, la canalisation de la lumière entrante provenant de sources ponctuelles différentes en fonction de leur position longitudinale est effectuée dans le plan focal. Elle est effectuée en utilisant un élément ayant des propriétés de polarisation dépendantes de la position latérale. La lumière entrant à partir d'un point placé longitudinalement à un plan déterminé sera incidente sur une position donnée aura des propriétés de polarisation spécifiques, et la lumière incidente en provenance de points placés à des positions longitudinales - et latérales - différentes, seront incidentes sur d'autres positions dans le plan focal, qui ont des caractéristiques de polarisation différentes.

Quant à une discussion plus approfondie de la manière de l'utilisation et l'exploitation de l'invention, elle devrait ressortir de la description ci-dessus. Par conséquent, aucune discussion relative à la forme de l'utilisation et du fonctionnement ne sera décrite.

À cet égard, avant d'expliquer au moins un mode de réalisation de l'invention dans le détail, il est entendu que l'invention n'est pas limitée dans son application aux détails de la construction et au régime des composantes énoncées dans la description suivante ou illustrées dans le dessin. L'invention est capable d'autres modes de réalisation et peut être pratiquée et effectuée de diverses manières. En outre, il est entendu que la phraséologie et la terminologie employée dans ce document sont dans le but de la description et ne devrait pas être considérée comme limitative.

Les références citées ici enseignent de nombreux principes qui sont applicables à la présente invention. Par conséquent, la totalité du contenu de ces publications sont incorporés ici par référence, le cas échéant pour les enseignements de détails supplémentaires ou de remplacement, les caractéristiques et / ou d'information technique.

Les modes de réalisation de l'invention décrits peuvent être intégrés sur un microscope confocal de fluorescence. Le système de superrésolution selon des modes de réalisation de l'invention consiste en une nouvelle modalité de mesure, en complément ou en remplacement des modalités existantes de la microscopie. Toutefois, le système de superrésolution selon des modes de réalisation de l'invention peut tout aussi bien être intégré sur les autres plateformes de microscopie. Ces plateformes de microscopie, décrites par exemple en comprennent mais ne sont pas limité aux: microscopes à champ large, « Bright field microscope », microscopes à champ obscur, « dark field microscope », les microscopes de polarisation, les microscopes à différence de phase, les microscopes à interférence différentiel de contraste, les microscopes stéréoscopiques, les microscopes Raman, les microscopes dédiés à une tache spécifique, comme le « live cell imaging », le « cell sorting », « cell motility » ou tout autre instrument de microscopie optique, tels que décrits par exemple dans la référence [4]..

Il est entendu que l'invention n'est pas limitée dans son application aux détails énoncés dans la description contenue dans les présentes ou illustrés dans les dessins. L'invention est capable d'autres modes de réalisation et d'être pratiquée et effectuée de diverses manières. L'homme de l'art comprendra aisément que diverses modifications et changements peuvent être appliquées aux modes de réalisation de l'invention tel que décrit précédemment sans sortir de son champ d'application, définie dans et par les revendications annexées.

## REFERENCES

1. R. Henriques and M. M. Mhlanga, "PALM and STORM: What hides beyond the Rayleigh limit?," Biotechnology journal 4, 846-857 (2009).
2. K. R. Chi, "Super-resolution microscopy: breaking the limits," Nature Methods 6, 15-18 (2008).
3. Z. Co, "Zeiss, "Zeiss Microscopy and image analysis" (2011), retrieved http://www.zeiss.com/4125681C00466C26/?Open
4. N. Co., "MicroscopyU: the source for Microscopy education" (2011), retrieved http://www.microscopyu.com/.
5. Lindegren, "Photoelectric astrometry - A comparison of methods for précise image location," in Modern astrometry; Proceedings of the Colloquium, Vienna, Austria, September 11-14, 1978., 1978), 197-217.
6. J. F. Nye and M. V. Berry, "Dislocations in Wave Trains," Proceedings of the Royal Society of London. Series A, Mathematical and Physical Sciences (1934-1990) 336, 165-190 (1974).
7. S. W. Hell and J. Wichmann, "Breaking the diffraction resolution limit by stimulated emission: stimulated-emission-depletion fluorescence microscopy," Optics letters 19, 780-782 (1994).
8. M. J. Rust, M. Bates, and X. Zhuang, "Sub-diffraction-limit imaging by stochastic optical reconstruction microscopy (STORM)," Nat Meth 3, 793-796 (2006).
9. E. Betzig, G. H. Patterson, R. Sougrat, O. W. Lindwasser, S. Olenych, J. S. Bonifacino, M. W. Davidson, J. Lippincott-Schwartz, and H. F. Hess, "Imaging intracellular fluorescent proteins at nanometer resolution," Science 313, 1642 (2006).
10. W. Denk, J. P. Strickler, and W. W. Webb, "Two-photon laser microscopy," (Google Patents, 1991).
11. A. Korzybski and D. Kohn, Une carte n'est pas le territoire: prolégomènes aux systèmes non-aristotéliciens et à la sémantique générale (éditions de l'éclat, 1998).
12. W. R. Hamilton, "Third Supplement to an Essay on the Theory of Systems of Rays," Trans. Royal Irish. Acad., pp 1-144 (1833).
13. H. Llyold, "On the Phenomena presented by Light in its Passage along the Axes of Biaxial Crystals," The London and Edinburgh Philosophical Magazine and Journal of Science ii, 112-120 (1833).
14. H. Llyold, "Further Experiments on the Phenomena presented by Light in its Passage along the Axes of Biaxal Crystals.," The London and Edinburgh Philosophical Magazine and Journal of Science ii, 207-210 (1833).
15. M. V. Berry, "Conical diffraction asymptotics: fine structure of Poggendorff rings and axial spike," Journal Of Optics A-Pure And Applied Optics 6, 289-300 (2004).
16. M. Berry and M. Jeffrey, "Conical diffraction complexified: dichroism and the transition to double refraction," Journal Of Optics A-Pure And Applied Optics 8, 1043 (2006).
17. M. Berry and M. Jeffrey, "Chiral conical diffraction," Journal Of Optics A-Pure And Applied Optics 8, 363 (2006).
18. C. Phelan, D. O'Dwyer, Y. Rakovich, J. Donegan, and J. Lunney, "Conical diffraction and Bessel beam formation with a high optical quality biaxial crystal," J. Opt. A, Pure Appl. Opt 7, 685-690 (2009).
19. M. Berry and M. Jeffrey, "Conical diffraction: Hamilton's diabolical point at the heart of crystal optics," Progress in Optics 50, 13 (2007).
20. A. Geivandov, I. Kasianova, E. Kharatiyan, A. Lazarev, P. Lazarev, and S. Palto, "Printable Thin Birefringent Film Retarders for LCD."
21. B. Acharya, A. Primak, T. Dingemans, E. Samulski, and S. Kumar, "The elusive thermotropic biaxial nematic phase in rigid bent-core molecules," Pramana 61, 231-237 (2003).
22. T. Maldonado, "Electro-optic modulators," in Handbook of Optics, M. Bass, ed. (McGraw Hill, Orlando, 1995).

23. J. Kemp, "Piezo-optical birefringence modulators: new use for a long-known effect," Journal of the Optical Society of America 59, 950-953 (1969).

24. M. Minsky, "Microscopy apparatus," (Google Patents, 1961).

25. D. H. Goldstein and E. Collett, Polarized light (CRC, 2003), Vol. 83.

26. J. B. Pawley, Handbook of biological confocal microscopy (Springer Verlag, 2006).

27. M. Bass, Handbook of optics (McGraw-Hill, 2001).

28. Y. Zhang, "Generation of three-dimensional dark spots with a perfect light shell with a radially polarized Laguerre-Gaussian beam," Applied optics 49, 6217-6223 (2010).

**Revendications**

1. Un procédé optique de mesure pour déterminer la position spatiale d'au moins un nanoémetteur lumineux d'un échantillon, le procédé comportant :

   la projection d'une séquence d'au moins deux distributions lumineuses compactes de familles topologiques différentes sur l'échantillon,
   la détection de la lumière réémise par ledit au moins un nanoémetteur lumineux de l'échantillon ;
   la génération, d'au moins une image optique pour chaque distribution lumineuse, à partir de la lumière détectée ; et
   l'analyse algorithmique des images optiques pour obtenir une information de localisation dudit au moins un nanoémetteur lumineux;
   les deux distributions lumineuses compactes sont de familles topologiques différentes et sont collocalisées sur l' échantillon,
   le procédé étant **caractérisé en ce que** lesdites au moins deux distributions lumineuses compactes de familles topologiques différentes sont créées par une interférence entre une onde régulière et une onde singulière, ou entre deux ondes singulières, et une différenciation spatiale entre lesdites au moins deux distributions est créée en faisant varier au moins un des paramètres suivants:

   a) au moins un des paramètres de l'onde régulière;
   b) au moins un paramètre d'au moins une onde singulière et
   c) une différence de phase entre l'onde régulière et l'onde singulière ou entre les deux ondes singulières.

2. Un procédé selon la revendication précédente comportant en outre la séparation d'une onde incidente régulière, en deux ondes régulières suivant des trajets géométriques séparés ;
   la transformation, d'au moins une des ondes optiques régulières en une onde optique singulière; et
   la fusion des deux ondes optiques émergeantes créées.

3. Un procédé selon l'une quelconque des revendications précédentes comportant en outre au moins un des étapes suivantes :

   le contrôle de amplitude relative des ondes régulières et/ou singulières ;
   le contrôle dans une séquence prédéterminée, de la polarisation et / ou de l'état de phase de l'onde lumineuse d'entrée ou de sortie d'un sous-module cristallin créant les ondes régulières et singulières; le contrôle de la forme des ondes régulières ou singulières ; et
   l'alignement de la position centrale de la distribution lumineuse d'une onde par rapport à l'autre.

4. Un procédé selon l'une quelconque des revendications précédentes comportant en outre
   la mise en forme, statique ou dynamique, de la polarisation émergeante de la superposition desdites distributions lumineuses, en mesure d'atténuer les effets vectoriels, sur la forme et la taille desdites distributions lumineuses compactes, effets créés par une grande ouverture numérique de l'objectif pour la génération des images optiques, en façonnant la polarisation émergeante en fournissant un état de polarisation statique à symétrie de rotation telle que une polarisation circulaire, radiale ou azimutale et / ou un état de polarisation dynamique.

5. Un procédé selon l'une quelconque des revendications précédentes dans lequel une région d'une taille sensiblement inférieure à une longueur d'onde $\lambda$ moyenne de la lumière réémise existe dans l'échantillon , dans laquelle la valeur d'une combinaison mathématique spécifique des intensités ou amplitudes desdits au moins deux distributions lumineuses compactes de familles topologiques différentes est positive pour les positions latérales de la partie desdites distributions lumineuses inclus dans ladite région, et dans lequel ladite combinaison mathématique spécifique est proche de zéro dans toutes les autres parties de la distribution lumineuse au-delà de ladite région.

6. Un procédé selon l'une quelconque des revendications précédentes dans lequel, au moins un nanoémetteur est un fluorophore avec une séquence d'intensités lumineuses de fluorescence qui dépend de l'intensité incidente de la séquence de distributions lumineuses compactes de familles topologiques différentes sur ledit fluorophore caractérisant ainsi la position spatiale dudit fluorophore.

7. Un procédé selon l'une quelconque des revendications précédentes dans lequel, une région, dont la taille est nettement inférieure à la longueur d'onde λ moyenne de la lumière réémise, existe dans l'échantillon, dans laquelle une comparaison d'une pluralité de combinaisons mathématiques de ladite séquence de distributions lumineuses compactes de familles topologiques différentes, permet de différencier entre au moins un des éléments suivants:

   a) un nanoémetteur lumineux unique;
   b) une pluralité denanoémetteurs lumineux collocalisés; et
   c) une pluralité de nanoémetteurs lumineux -situé à une distance de l'autre, déterminant ainsi la distance entre les nanoémetteurs lumineux.

8. Un procédé selon l'une des revendications précédentes comportant en outre la variation de la séquence dudit au moins deux distributions lumineuses, et/ou la position de la séquence dudit au moins deux distributions lumineuses en fonction de données mesurées et/ou d'information externes.

9. Un procédé selon l'une des revendications précédentes dans lequel la projection de distributions lumineuses de topologies différentes est effectuée par une diffraction conique et modifiée par une variation des états de polarisation d'entrée et de sortied'un cristal conique.

10. Un dispositif optique de mesure pour déterminer la position spatiale d'au moins un nanoémetteur lumineux positionné d'un échantillon, le dispositif comportant :

   des moyens de projection aptes à projeter une séquence d'au moins deux distributions lumineuses compactes sur l'échantillon;
   des moyens de détection aptes à détecter la lumière réémise par ledit au moins un nanoémetteur lumineux de l'échantillon ;
   des moyens de génération aptes à générer au moins une image pour chaque distribution lumineuse, à partir de la lumière détectée ; et
   des moyens d'analyse aptes à effectuer une analyse algorithmique des images pour obtenir une information de localisation dudit au moins un nanoémetteur lumineux; les deux distributions lumineuses compactes sont de familles topologiques différentes et en ce que les moyens de projections sont configurés pour collocaliser les deux distributions lumineuses compactes sur l' échantillon, **caractérisé en ce que**
   les moyens de projection sont aptes à créer lesdites au moins deux distributions lumineuses par une interférence entre une onde régulière et une onde singulière ou entre deux ondes singulières, et à créer une différenciation spatiale entre lesdites au moins deux distributions en faisant varier au moins un des paramètres suivants:

   a) au moins un des paramètres de l'onde régulière;
   b) au moins un paramètre d'au moins une onde singulière et
   c) une différence de phase entre l'onde régulière et l'onde singulière, ou entre les deux ondes singulières.

11. Un dispositif selon la revendication 10, interfacé optiquement à une source de lumière et comprenant au moins l'un des éléments suivants:

   a) un sous-module cristallin, pour créer à partir d'une onde lumineuse incidente, deux ondes lumineuses collocalisées, une régulière et une singulière, ou deux ondes singulières collocalisées, ledit sous-module cristallin comprenant un cristal biaxe mince et/ou un cristal uniaxe;
   b) un sous-module optique apte à séparer une onde incidente régulière, en deux ondes régulières suivant des trajets géométriques séparés, ce sous module étant configuré pour transformer, l'une des ondes optiques régulières en une onde optique singulière, en utilisant des moyens de transformation comprenant au moins: un réseau à pas inférieur à la longueur d'onde moyenne de la lumière réémise, et un cristal uniaxe ou biaxe mince, et dans lequel le sous module optique est conçu pour fusionner les deux ondes optiques émergeantes créées;

c) un polariseur partiel, adapté à contrôler l'amplitude relative des ondes régulières et singulières et éventuellement à translater la position centrale de la distribution lumineuse d'une onde par rapport à l'autre ;

d) un sous-module de contrôle optique d'amplitude, polarisation ou phase, composé d'au moins un élément optique réglable ou contrôlable, capable de contrôler, dans une séquence prédéterminée, l'amplitude, la polarisation et / ou état de phase de l'onde lumineuse d'entrée ou de sortie du sous-module cristallin;

e) un sous-module de contrôle, composé d'au moins un élément optique réglable, capable de contrôler, la forme des ondes régulières ou singulières,

f) un analyseur de polarisation, et

g) un sous module de mise en forme, statique ou dynamique, de la polarisation émergeante de la superposition desdites distributions lumineuses, en mesure d'atténuer les effets vectoriels, sur la forme et la taille de chaque distribution lumineuse compacte, effets créés par une grande ouverture numérique de l'objectif des moyens de génération des images optiques, en façonnant la polarisation émergeante en fournissant un état de polarisation statique à symétrie de rotation telle que les polarisations circulaire, radiale ou azimutale et / ou un état de polarisation dynamique.

12. Un dispositif selon l'une quelconque des revendications 10 à 11, dans lequel une région, dont la taille est nettement inférieure à la longueur d'onde λ moyenne de la lumière émise, existe dans l'échantillon, et comportant en outre un comparateur pour effectuer une comparaison d'une pluralité de combinaisons mathématiques de ladite séquence de distributions lumineuses compactes de familles topologiques différentes, pour différencier entre au moins un des éléments suivants:

a) un nanoémetteur lumineux unique;

b) une pluralité de nanoémetteurs lumineux collocalisés; et

c) une pluralité denanoémetteurs lumineux -situé à une distance de l'autre, déterminant ainsi la distance entre les nanoémetteurs lumineux.

13. Un dispositif selon l'une des revendications 10 à 12, dans lequel les moyens de projection sont configurés pour varier la séquence dudit au moins deux distributions lumineuses, et/ou la position de la séquence dudit au moins deux distributions lumineuses en fonction de données mesurées ou d'information externes.

14. Un dispositif selon l'une des revendications 10 à 13, dans lequel les moyens de projection comprennent un cristal conique et des moyens pour faire varier les états de polarisation d'entrée et de sortie dudit module de diffraction.

15. Un dispositif selon l'une quelconque des revendications 10 à 14 configuré pour mesurer la position latérale dudit au moins un nanoémetteur lumineux.

16. Un procédé selon la revendication 1 pour déterminer la position longitudinale,d'au moins un nanoémetteur lumineux d'un échantillon, en projetant des distributions lumineuses compactes, certaines d'entre elles indépendantes et certaines d'entre elles dépendantes de la position longitudinale pour déterminer la position longitudinale dudit au moins un nanoémetteur lumineux

**Patentansprüche**

1. Optisches Messverfahren zur Bestimmung der räumlichen Position von mindestens einem Lichtnanoemitter einer Probe, wobei das Verfahren Folgendes umfasst:

Projektion einer Abfolge von zumindest zwei kompakten Lichtverteilungen unterschiedlicher topologischer Familien auf die Probe,

Erfassen des von dem zumindest einen Lichtnanoemitter der Probe reemittierten Lichts;

Erzeugung von zumindest einem optischen Bild bei jeder Lichtverteilung ausgehend vom erfassten Licht; und algorithmische Analyse der optischen Bilder, um eine Ortsinformation des zumindest einen Lichtnanoemitters zu erhalten;

die beiden kompakten Lichtverteilungen sind aus unterschiedlichen topologischen Familien und befinden sich gemeinsam auf der Probe,

wobei das Verfahren **dadurch gekennzeichnet ist, dass** die zumindest zwei kompakten Lichtverteilungen aus verschiedenen topologischen Familien durch Interferenz zwischen einer regelmäßigen Welle und einer Einzelwelle oder zwischen zwei Einzelwellen erzeugt werden und eine räumliche Differenzierung zwischen den zumindest zwei Verteilungen durch Variation mindestens eines der folgenden Parameter erzeugt wird:

a) zumindest einer der Parameter der regelmäßigen Welle;
b) zumindest ein Parameter von mindestens einer Einzelwelle und
c) eine Phasendifferenz zwischen der regelmäßigen Welle und der Einzelwelle oder zwischen den beiden Einzelwellen.

**2.** Verfahren nach dem vorstehenden Anspruch, das ferner umfasst:

die Trennung einer regelmäßig einfallenden Welle in zwei regelmäßige Wellen entlang getrennter geometrischer Bahnen;
die Umwandlung von zumindest einer der regelmäßigen optischen Wellen in eine optische Einzelwelle; und
die Verschmelzung der beiden geschaffenen entstehenden optischen Wellen.

**3.** Verfahren nach einem beliebigen der vorstehenden Ansprüche, das ferner zumindest einen der folgenden Schritte umfasst:

die Kontrolle der relativen Amplitude der regelmäßigen und/oder Einzelwellen;
die Kontrolle in einer vorgegebenen Abfolge der Polarisation und/oder des Phasenzustands der Lichtwelle am Eingang oder Ausgang eines kristallinen Submoduls, das die regelmäßigen und die Einzelwellen erzeugt;
die Kontrolle der Form der regelmäßigen oder Einzelwellen; und
die Ausrichtung der zentralen Position der Lichtverteilung einer Welle gegenüber der anderen.

**4.** Verfahren nach einem beliebigen der vorstehenden Ansprüche, das ferner Folgendes umfasst:
die statische oder dynamische Formgebung der entstehenden Polarisation der Überlagerung der Lichtverteilungen, die Vektoreffekte auf die Form und die Größe der kompakten Lichtverteilungen dämpfen kann, wobei die Effekte durch eine große numerische Apertur des Objektivs zur optischen Bilderzeugung geschaffen werden, indem die entstehende Polarisation durch einen rotationssymmetrischen statischen Polarisationszustand wie zirkulare, radiale oder azimutale Polarisation und/oder einen Zustand der dynamischen Polarisation geformt wird.

**5.** Verfahren nach einem beliebigen der vorstehenden Ansprüche, wobei ein Bereich von einer wesentlich geringeren Größe als diejenige einer durchschnittlichen $\Lambda$-Wellenlänge des reemittierten Lichtes in der Probe vorhanden ist, wobei der Wert einer spezifischen mathematischen Kombination der Stärken oder Amplituden der mindestens zwei kompakten Lichtverteilungen unterschiedlicher topologischer Familien in dem Bereich ist, und wobei die spezifische mathematische Kombination in allen anderen Teilen der Lichtverteilung über diesen Bereich hinaus nahe Null liegt.

**6.** Verfahren nach einem beliebigen der vorstehenden Ansprüche, wobei zumindest ein Nanoemitter ein Fluorophor mit einer Abfolge von Fluoreszenzlichtstärken ist, die von der einfallenden Stärke der Abfolge von kompakten Lichtverteilungen unterschiedlicher topologischer Familien auf dem Fluorophor abhängt, wodurch die räumliche Position des Fluorophors charakterisiert wird.

**7.** Verfahren nach einem beliebigen der vorstehenden Ansprüche, wobei ein Bereich, dessen Größe wesentlich kleiner als diejenige einer durchschnittlichen $\Lambda$-Wellenlänge des reemittierten Lichtes ist, in der Probe vorhanden ist, wobei ein Vergleich einer Mehrzahl von mathematischen Kombinationen dieser Abfolge von kompakten Lichtverteilungen unterschiedlicher topologischer Familien es ermöglicht, zwischen mindestens einem der folgenden Elemente zu unterscheiden:

a) ein einzelner Lichtnanoemitter;
b) eine Mehrzahl von gemeinsam vorhandenen Lichtnanoemittern; und
c) eine Mehrzahl von Lichtnanoemittern, die sich in einem Abstand voneinander befinden, wodurch der Abstand zwischen den Lichtnanoemittern bestimmt wird.

**8.** Verfahren nach einem beliebigen der vorstehenden Ansprüche, das ferner die Variation der Abfolge der zumindest zwei Lichtverteilungen und/oder die Position der Abfolge der mindestens zwei Lichtverteilungen in Abhängigkeit von gemessenen Daten und/oder externen Informationen umfasst.

9. Verfahren nach einem beliebigen der vorstehenden Ansprüche, wobei die Projektion von Lichtverteilungen unterschiedlicher Topologien durch konische Beugung durchgeführt und durch eine Variation der Polarisationszustände am Eingang und am Ausgang eines konischen Kristalls geändert wird.

10. Optische Messvorrichtung zur Bestimmung der räumlichen Position von zumindest einem positionierten Lichtnanoemitter einer Probe, wobei die Vorrichtung umfasst:

Projektionsmittel, die geeignet sind, eine Abfolge von mindestens zwei kompakten Lichtverteilungen auf die Probe zu projizieren;
Erfassungsmittel, die geeignet sind, das von dem zumindest einen Lichtnanoemitter der Probe reemittierte Licht zu erfassen;
Erzeugungsmittel, die geeignet sind, zumindest ein Bild für jede Lichtverteilung ausgehend vom erfassten Licht zu erzeugen; und
Analysemittel, die geeignet sind, eine algorithmische Analyse der Bilder durchzuführen, um eine Information über den Standort des zumindest einen Lichtnanoemitters zu erhalten, wobei die beiden kompakten Lichtverteilungen unterschiedlicher topologischer Familien sind, und wobei die Projektionsmittel so konfiguriert sind, dass sie die beiden kompakten Lichtverteilungen gemeinsam auf der Probe zusammenfassen,
**dadurch gekennzeichnet, dass**:
die Projektionsmittel in der Lage sind, diese zumindest zwei Lichtverteilungen durch eine Interferenz zwischen einer regelmäßigen Welle und einer Einzelwelle oder zwischen zwei Einzelwellen zu erzeugen, und um eine räumliche Differenzierung zwischen den zumindest zwei Verteilungen durch Variation mindestens eines der folgenden Parameter zu erzeugen:

a) zumindest einer der Parameter der regelmäßigen Welle;
b) zumindest ein Parameter von mindestens einer Einzelwelle und
c) eine Phasendifferenz zwischen der regelmäßigen Welle und der Einzelwelle oder zwischen den beiden Einzelwellen.

11. Vorrichtung nach Anspruch 10, die eine optische Schnittstelle zu einer Lichtquelle hat und zumindest eines der folgenden Elemente aufweist:

a) ein kristallines Submodul, um aus einer einfallenden Lichtwelle zwei gemeinsam vorhandene Lichtwellen, eine regelmäßige und eine Einzelwelle oder zwei gemeinsam vorhandene Einzelwellen zu erzeugen, wobei das kristalline Submodul einen dünnen biaxialen Kristall und/oder einen einachsigen Kristall umfasst;
b) ein optisches Submodul, das geeignet ist, eine regelmäßige einfallende Welle in zwei regelmäßige Wellen entlang getrennter geometrischer Bahnen zu trennen, wobei dieses Submodul so konfiguriert ist, dass es eine der regelmäßigen optischen Wellen in eine optische Einzelwelle umwandelt, wobei es Umsetzungsmittel verwendet, die mindestens Folgendes umfassen: ein Netz mit einer Teilung kleiner als die mittlere Wellenlänge des reemittierten Lichtes und einen einachsigen oder dünnen biaxialen Kristall, und wobei das optische Submodul dazu ausgelegt ist, die beiden geschaffenen entstehenden optischen Wellen zu verschmelzen;
c) einen Teilpolarisator, der geeignet ist, die relative Amplitude der regelmäßigen und Einzelwellen zu kontrollieren gegebenenfalls die zentrale Position der Lichtverteilung einer Welle gegenüber der anderen zu verschieben;
d) ein Submodul für die optische Kontrolle von Amplitude, Polarisation oder Phase, das aus zumindest einem einstellbaren oder kontrollierbaren optischen Element besteht, das fähig ist, in einer vorbestimmten Abfolge die Amplitude, die Polarisation und/oder den Phasenzustand der Lichtwelle am Eingang oder Ausgang des kristallinen Submoduls zu kontrollieren;
e) ein Kontroll-Submodul, das aus zumindest einem einstellbaren optischen Element besteht, das fähig ist, die Form der regelmäßigen oder Einzelwellen zu kontrollieren,
f) einen Polarisationsanalysator, und
g) ein Submodul zur statischen oder dynamischen Formgebung der entstehenden Polarisation der Überlagerung der Lichtverteilungen, die Vektoreffekte auf die Form und die Größe der kompakten Lichtverteilungen dämpfen kann, wobei die Effekte durch eine große numerische Apertur des Objektivs zur optischen Bilderzeugung geschaffen werden, indem die entstehende Polarisation durch einen rotationssymmetrischen statischen Polarisationszustand wie zirkulare, radiale oder azimutale Polarisation und/oder einen Zustand der dynamischen Polarisation geformt wird.

12. Vorrichtung nach einem beliebigen der vorstehenden Ansprüche 10 bis 11, wobei ein Bereich, dessen Größe wesentlich kleiner als diejenige einer durchschnittlichen $\Lambda$-Wellenlänge des reemittierten Lichtes ist, in der Probe vorhanden ist, wobei ein Vergleich einer Mehrzahl von mathematischen Kombinationen dieser Abfolge von kompakten Lichtverteilungen unterschiedlicher topologischer Familien es ermöglicht, zwischen mindestens einem der folgenden Elemente zu unterscheiden:

a) ein einzelner Lichtnanoemitter;
b) eine Mehrzahl von gemeinsam vorhandenen Lichtnanoemittern; und
c) eine Mehrzahl von Lichtnanoemittern, die sich in einem Abstand voneinander befinden, wodurch der Abstand zwischen den Lichtnanoemittern bestimmt wird.

**13.** Vorrichtung nach einem beliebigen der vorstehenden Ansprüche 10 bis 12, wobei die Projektionsmittel so konfiguriert sind, um die Abfolge der zumindest zwei Lichtverteilungen und/oder die Position der Abfolge der mindestens zwei Lichtverteilungen in Abhängigkeit von gemessenen Daten und/oder externen Informationen zu variieren.

**14.** Vorrichtung nach einem beliebigen der vorstehenden Ansprüche 10 bis 13, wobei die Projektionsmittel einen konischen Kristall und Mittel zum Variieren der Polarisationszustände am Eingang und am Ausgang des Beugungsmoduls umfassen.

**15.** Vorrichtung nach einem beliebigen der vorstehenden Ansprüche 10 bis 14, die so konfiguriert ist, dass sie die seitliche Position des zumindest einen Lichtnanoemitters misst.

**16.** Verfahren nach Anspruch 1 zur Bestimmung der Längsposition zumindest eines Lichtnanoemitters einer Probe durch Projektion kompakter Lichtverteilungen, von denen einige unabhängig und andere abhängig von der Längsposition sind, um die Längsposition des zumindest einen Lichtnanoemitters zu bestimmen.

**Claims**

**1.** A method of optical measurement for determining the spatial position of at least one light nanoemitter on a sample, the method comprising:

projecting a sequence of at least two compact light distributions of different topological families onto the sample, detecting the light reemitted by said at least one light nanoemitter of the sample;
generating at least one optical image for each light distribution, from the detected light; and
algorithmically analyzing the optical images to obtain a location information of said at least one light nanoemitter, the two compact light distributions are of different topological families and are collocated on the sample,
the method being **characterized in that** said at least two compact light distributions of different topological families are created by an interference between a regular wave and a singular wave, or between two singular waves, and spatial differentiation between said at least two distributions is created by varying at least one of following parameters:

a) at least one of the parameters of the regular wave;
b) at least one parameter of at least one singular wave; and
c) a phase difference between the regular wave and the singular wave or between two singular waves.

**2.** The method according to the preceding claim further comprising:

separating an incident regular wave, into two regular waves along separate geometric paths;
transforming at least one of the regular optical waves in a singular optical wave; and
merging the two created emerging optical waves.

**3.** The method according to any one of the preceding claims further comprising at least one of the following steps:

control of the relative amplitude of the regular and/or singular waves;
control in a predetermined sequence, of the polarization and/or the phase state of the input or output light wave of a crystalline sub-module creating the regular and singular waves;
control of the shape of the singular or regular waves; and aligning of the central position of the light distribution of a wave with respect to the other.

4. The method according to any one of the preceding claims further comprising:
static or dynamic shaping of the polarization emerging from the superposition of said light distributions, to mitigate the vector effects on the shape and size of said compact light distributions, effects created by a large digital aperture of the lens for the generation of optical images, in shaping the emergent polarization by providing a static polarization state having rotational symmetry such as a circular, radial or azimuthal polarization and/or a dynamic state of polarization.

5. The method according to any one of the preceding claims wherein a region of a size substantially less than a mean wavelength $\Lambda$ of the re-emitted light exists in the sample, wherein the value of a specific mathematical combination of the intensities or amplitudes of said at least two compact light distributions of different topological families is positive for the lateral positions of the part of said light distributions included in said region, and wherein said specific mathematical combination is close to zero in all other parts of the light distribution beyond said region.

6. The method according to any one of the preceding claims wherein at least one nanoemitter is a fluorophore with a sequence of light fluorescence intensities which depends on the incident intensity of the sequence of compact light distributions of different topological families on said fluorophore thereby characterizing the spatial position of said fluorophore.

7. The method according to any one of the preceding claims wherein a region, having a size which is substantially less than the mean wavelength $\Lambda$ of the re-emitted light, exists in the sample, wherein a comparison of a plurality of mathematical combinations of said sequence of compact light distributions of different topological families, is used to distinguish between at least one of the following:

   a) a single light nanoemitter;
   b) a plurality of collocated light nanoemitters; and
   c) a plurality of light nanoemitters located at a distance from each other, thereby determining the distance between the light nanoemitters.

8. The method according to any one of the preceding claims further comprising varying the sequence of said at least two light distributions, and/or the position of the sequence of said at least two light distributions as a function of measured data and/or external information.

9. The method according to any one of the preceding claims wherein the projection of light distributions of different topologies is performed by conical diffraction and modified by a variation of the input and output polarization states of a conical crystal.

10. An optical measurement device for determining the spatial position of at least one positioned light nanoemitter of a sample, the device comprising:

   projection means adapted to project a sequence of at least two compact light distributions onto the sample;
   detecting means adapted to detect the light re-emitted by said at least one light nanoemitter of the sample;
   generating means adapted to generate at least one image for each light distribution, from the detected light; and analysis means adapted for performing an algorithmic analysis of the images to obtain location information of said at least one light nanoemitter;
   the two compact light distributions are of different topological families and the projecting means are configured to collocate the two compact light distributions on the sample,
   **characterized in that**
   the projecting means are adapted to create said at least two light distributions by an interference between a regular wave and a singular wave or between two singular waves, and to create spatial differentiation between said at least two distributions by varying at least one of the following parameters:

   a) at least one of the parameters of the regular wave;
   b) at least one parameter of at least one singular wave; and
   c) a phase difference between the regular wave and the singular wave or between the two singular waves.

**11.** The device according to claim 10, optically interfaced to a light source and comprising at least one of the following:

a) a crystalline sub-module, to create from an incident light wave, two collocated light waves, comprising one regular and one singular, or two collocated singular waves, said crystalline sub-module comprising a thin biaxial crystal and/or a uniaxial crystal;

b) an optical sub-module adapted to separate a regular incident wave, into two regular waves along separate geometric paths, this sub-module being configured to transform, one of the regular optical waves in a singular an optical wave, using transformation means comprising at least: a network of steps less than the mean wavelength of the re-emitted light, and a thin biaxial or uniaxial crystal, and wherein the optical sub-module is designed to merge the two created emerging optical waves;

c) a partial polarizer, adapted to control the relative amplitude of regular and singular waves and optionally to translate the central position of the light distribution of a wave with respect to the other;

d) an optical control sub-module of amplitude, polarization or phase, comprising at least one adjustable or controllable optical element capable of controlling, in a predetermined sequence, amplitude, polarization and/or phase state of the input or output wave light of the crystalline sub-module;

e) a control sub-module consisting of at least one adjustable optical element, capable of controlling the shape of the regular or singular waves,

f) a polarization analyzer, and

g) a static or dynamic sub-module shaping the emerging polarization from the superposition of said distributions bright, able to mitigate the vector effects on the shape and size of each compact light distribution, effects created by a large digital aperture of the lens of the means for generating the optical images, by shaping the emerging polarization by providing a static polarization state rotationally symmetrical such that the circular, radial or azimuthal polarizations and/or a dynamic state of polarization.

**12.** A device according to any one of claims 10 to 11, wherein a region, whose size is substantially less than the mean wavelength $\lambda$ of the emitted light, exists in the sample, and further comprising a comparator for comparing a plurality of mathematical combinations of said sequence of compact light distributions of different topological families, for differentiating between at least one of the following:

a) a single light nanoemitter;

b) a plurality of collocated light nanoemitters; and

c) a plurality of light nanoemitters located at a distance from each other, thereby determining the distance between the light nanoemitters.

**13.** The device according to one of claims 10 to 12, wherein the projecting means is configured to vary the sequence of said at least two light distributions, and/or the position of the sequence of said at least two light distributions as a function of measured data or external information.

**14.** The device according to one of claims 10 to 13, wherein the projecting means comprises a conical crystal and means for varying the input and output polarization states of of said diffraction module.

**15.** The device according to any one of claims 10 to 14 configured to measure the lateral position of said at least one light nanoemitter.

**16.** A method according to claim 1 for determining the longitudinal position of at least one light nanoemitter in a sample, projecting compact light distributions, some of them independent and some of them depend on the longitudinal position for determining the longitudinal position of said at least one light nanoemitter.

FIG. 1

FIG. 2

FIG. 3

FIG. 4a

FIG. 4b

FIG. 4c

FIG. 4d

900

67

65

600

200

800

1100

500

22

11

FIG. 5

FIG. 6

**Figure 7a**

**Figure 7b**

FIG. 8

FIG. 9

**Figure 10**

FIG. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009066253 A

**Littérature non-brevet citée dans la description**

- **R. HENRIQUES ; M. M. MHLANGA.** PALM and STORM: What hides beyond the Rayleigh limit?. *Biotechnology journal,* 2009, vol. 4, 846-857
- **K. R. CHI.** Super-resolution microscopy: breaking the limits. *Nature Methods,* 2008, vol. 6, 15-18
- **Z. CO, ''ZEISS.** *Zeiss Microscopy and image analysis,* 2011, http://www.zeiss.com/4125681C00466C26/?Open
- **N. CO.** *MicroscopyU: the source for Microscopy education,* 2011, http://www.microscopyu.com/.
- **LINDEGREN.** Photoelectric astrometry - A comparison of methods for précise image location. *Modern astrometry; Proceedings of the Colloquium, Vienna, Austria,* 11 Septembre 1978, 197-217
- **J. F. NYE ; M. V. BERRY.** Dislocations in Wave Trains. *Proceedings of the Royal Society of London. Series A, Mathematical and Physical Sciences,* 1934, vol. 336, 165-190
- **S. W. HELL ; J. WICHMANN.** Breaking the diffraction resolution limit by stimulated emission: stimulated-emission-depletion fluorescence microscopy. *Optics letters,* 1994, vol. 19, 780-782
- **M. J. RUST ; M. BATES ; X. ZHUANG.** Sub-diffraction-limit imaging by stochastic optical reconstruction microscopy (STORM). *Nat Meth,* 2006, vol. 3, 793-796
- **E. BETZIG ; G. H. PATTERSON ; R. SOUGRAT ; O. W. LINDWASSER ; S. OLENYCH ; J. S. BONIFACINO ; M. W. DAVIDSON ; J. LIPPINCOTT-SCHWARTZ ; H. F. HESS.** Imaging intracellular fluorescent proteins at nanometer resolution. *Science,* 2006, vol. 313, 1642
- **W. DENK ; J. P. STRICKLER ; W. W. WEBB.** Two-photon laser microscopy. *Google Patents,* 1991
- **A. KORZYBSKI ; D. KOHN.** Une carte n'est pas le territoire: prolégomènes aux systèmes non-aristotéliciens et à la sémantique générale. *éditions de l'éclat,* 1998
- **W. R. HAMILTON.** Third Supplement to an Essay on the Theory of Systems of Rays. *Trans. Royal Irish. Acad.,* 1-144
- **H. LLYOLD.** On the Phenomena presented by Light in its Passage along the Axes of Biaxial Crystals. *The London and Edinburgh Philosophical Magazine and Journal of Science,* vol. ii, 112-120
- **H. LLYOLD.** Further Experiments on the Phenomena presented by Light in its Passage along the Axes of Biaxal Crystals. *The London and Edinburgh Philosophical Magazine and Journal of Science,* vol. ii, 207-210
- **M. V. BERRY.** Conical diffraction asymptotics: fine structure of Poggendorff rings and axial spike. *Journal Of Optics A-Pure And Applied Optics,* 2004, vol. 6, 289-300
- **M. BERRY ; M. JEFFREY.** Conical diffraction complexified: dichroism and the transition to double refraction. *Journal Of Optics A-Pure And Applied Optics,* 2006, vol. 8, 1043
- **M. BERRY ; M. JEFFREY.** Chiral conical diffraction. *Journal Of Optics A-Pure And Applied Optics,* 2006, vol. 8, 363
- **C. PHELAN ; D. O'DWYER ; Y. RAKOVICH ; J. DONEGAN ; J. LUNNEY.** Conical diffraction and Bessel beam formation with a high optical quality biaxial crystal. *J. Opt. A, Pure Appl. Opt,* 2009, vol. 7, 685-690
- **M. BERRY ; M. JEFFREY.** Conical diffraction: Hamilton's diabolical point at the heart of crystal optics. *Progress in Optics,* 2007, vol. 50, 13
- **A. GEIVANDOV ; I. KASIANOVA ; E. KHARATIYAN ; A. LAZAREV ; P. LAZAREV ; S. PALTO.** *Printable Thin Birefringent Film Retarders for LCD*
- **B. ACHARYA ; A. PRIMAK ; T. DINGEMANS ; E. SAMULSKI ; S. KUMAR.** The elusive thermotropic biaxial nematic phase in rigid bent-core molecules. *Pramana,* 2003, vol. 61, 231-237
- Electro-optic modulators. **T. MALDONADO.** Handbook of Optics. McGraw Hill, 1995
- **J. KEMP.** Piezo-optical birefringence modulators: new use for a long-known effect. *Journal of the Optical Society of America,* 1969, vol. 59, 950-953
- **M. MINSKY.** Microscopy apparatus. *Google Patents,* 1961

- **D. H. GOLDSTEIN ; E. COLLETT.** Polarized light. CRC, 2003, vol. 83
- **J. B. PAWLEY.** Handbook of biological confocal microscopy. Springer Verlag, 2006
- **M. BASS.** Handbook of optics. McGraw-Hill, 2001
- **Y. ZHANG.** Generation of three-dimensional dark spots with a perfect light shell with a radially polarized Laguerre-Gaussian beam. *Applied optics,* 2010, vol. 49, 6217-6223